# EUROPÄISCHE PATENTSCHRIFT

(11) **EP 3 420 017 B1**
(45) Veröffentlichungstag und Bekanntmachung des Hinweises auf die Patenterteilung: **18.12.2019**
(21) Anmeldenummer: 17701844.7
(22) Anmeldetag: 24.01.2017
(51) Int. Cl.: C08G 73/06, C08L 77/02, C08L 77/06

(54) **POLYAMIDMISCHUNGEN MIT PYRROLIDON ENTHALTENDEN POLYAMIDEN**
POLYAMIDE BLENDS HAVING POLYAMIDES CONTAINING PYRROLIDONE
COMPOSITIONS DE POLYAMIDES COMPRENANT DES POLYAMIDES CONTENANT DU PYRROLIDONE

(30) Priorität: 22.02.2016 EP 16156764
(43) Veröffentlichungstag der Anmeldung: 02.01.2019
(73) Patentinhaber: BASF SE, 67056 Ludwigshafen am Rhein (DE)
(72) Erfinder: KRAEMER, Roland Helmut, 200137 Shanghai (CN); YAMAMOTO, Motonori, 67056 Ludwigshafen (DE)
(74) Vertreter: BASF IP Association
(86) Internationale Anmeldenummer: PCT/EP2017/051385
(87) Internationale Veröffentlichungsnummer: WO 2017/144209

(56) Entgegenhaltungen:
- EP-A1- 2 886 605
- CN-A- 105 175 717
- US-A- 4 243 777
- US-A- 4 418 189
- US-A1- 2003 055 152

## Beschreibung

Die Erfindung betrifft thermoplastische Formmassen, enthaltend
A) 10 bis 98 Gew.-% eines thermoplastischen Polyamides, verschieden von B),
B) 1 bis 50 Gew.-% eines thermoplastischen Polyamides, enthaltend mit den weiteren Wiederholungseinheiten gebundene 2-Pyrrolidon-Einheiten als Wiederholungseinheiten,
C) 0 bis 40 Gew.-% eines halogenfreien Flammschutzmittels,
D) 0 bis 60 Gew.-% eines faser- oder teilchenförmigen Füllstoffes oder deren Mischungen,
E) 0 bis 30 Gew.-% weiterer Zusatzstoffe,
wobei die Summe der Gewichtsprozente A) bis E) 100 % ergibt.

Außerdem betrifft die vorliegende Erfindung flammgeschützte Formmassen aus diesen Polyamidmischungen und die Verwendung derartiger Formmassen zur Herstellung von Fasern, Folien und Formkörpern und die hierbei erhältlichen Formkörper, Fasern und Folien jeglicher Art.

Pyrrolidonhaltige Polymere werden in den Lehren der US 3678015 und DE- A 4333238A1 beschrieben.
In akademischen Studien (Ali et. al., Macromolecules 2013, 46, 3719-3725) werden solche Polyamide als bioabbaubare Polymere beschrieben.

US 4,243,777 betrifft Polypyrrolidon-Legierungen. Dabei wird Poly-2-pyrrofidon mit einem linearen Polymer, beispielsweise Polyamid, durch Co-Fällung hergestellt, um eine Polymer-Legierung zu erhalten. Das Poly-2-pyrrolidon wird dabei ringöffnend polymerisiert zu Polyamid-4.

EP-A-2 886 605 betrifft thermoplastische flammgeschützte Kunststoffformmassen mit verbesserten mechanischen Eigenschaften. Die Formmassen enthalten Polyamid, Glasfasern und LDS-Additive sowie halogenfreie Flammschutzmittel.

US 4,418,189 betrifft Polyamide, die aus Itakonsäure und Diaminen hergestellt werden. Die entsprechenden Polyamide enthalten 2-Pyrrolidon-Einheiten als Wiederholungseinheiten. Die Kombination mit weiteren Polyamiden ist jedoch nicht beschrieben.

Es ist bekannt, dass sich durch Zugabe von allgemein teilaromatischen Polyamiden die Flammwidrigkeit von rotem Phosphor in Polyestern steigern lässt (Harashina, Hatsuhiko et al., Flame Retardants, Pages: 145-156, Conference, 2010, CODEN: 69MZSK, ISBN: 978-1-60741-501-5).

Weiterhin belegt allgemeine Literatur, dass Kunststoffe mit niedrigerer Wärmefreisetzungskapazität (heat release capacity) und niedrigerer spezifischer Verbrennungswärme (specific heat of combustion) eine höhere Flammwidrigkeit aufweisen (R. Lyon et al., Journal of Thermal Analysis and Calorimetry, Vol. 89 (2007) 2, 441-448).

Der vorliegenden Erfindung lag daher die Aufgabe zugrunde, thermoplastische Formmassen zur Verfügung zu stellen, welche durch Mischen von Polyamiden mit pyrrolidonhaltigen Polyamiden eine niedrigere Wärmefreisetzungskapazität (heat release capacity) und niedrigere spezifische Verbrennungswärme aufweisen, was zu einer intrinsisch besseren Flammwidrigkeit der Materialen führen soll.

Weiterhin sollen die Oberflächeneigenschaften (insbesondere Glanz) und die Haftung gegenüber Metalloberflächen verbessert werden. Die Fließfähigkeit sollte ebenso wie die Menge des Rückstandes nach Verbrennen verbessert werden. Durch den besseren intrinsischen Flammschutz soll die Zugabe der Flammschutzmittel für eine Klassifizierung nach UL94 von V0 verringert werden, da diese oft nachteilig die Eigenschaften der Polyamide verändern.

Demgemäß wurden die eingangs definierten Formmassen gefunden. Bevorzugte Ausführungsformen können den Unteransprüchen entnommen werden.

Als Komponente A) enthalten die erfindungsgemäßen Formmassen 10 bis 98, vorzugsweise 20 bis 90 und insbesondere 30 bis 80 Gew.-% mindestens eines Polyamides, verschieden von B).

Die Polyamide der erfindungsgemäßen Formmassen weisen im allgemeinen eine Viskositätszahl von 90 bis 350, vorzugsweise 110 bis 240 ml/g auf, bestimmt in einer 0,5 gew.-%igen Lösung in 96 gew.-%iger Schwefelsäure bei 25°C gemäß ISO 307.

Halbkristalline oder amorphe Harze mit einem Molekulargewicht Mw (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin (z.B. Ultramid® X17 der BASF SE, ein 1:1 molares Verhältnis von MXDA mit Adipinsäure), Di-(4-aminophenyl)methan, Di-(4-amino-cyclohexyl)-methan, 2,2-Di- (4-aminophenyl)-propan, 2,2-Di-(4-aminocyclohexyl)-propan oder 1,5-Diamino-2-methyl-pentan.

Bevorzugte Polyamide sind Polyhexamethylenadipinsäureamid, Polyhexamethylensebacinsäureamid und Polycaprolactam sowie Copolyamide 6/66, insbesondere mit einem Anteil von 5 bis 95 Gew.-% an Caprolactam-Einheiten (z.B. Ultramid® C31 der BASF SE).

Weiterhin geeignete Polyamide sind erhältlich aus ω-Aminoalkylnitrilen wie beispielsweise Aminocapronitril (PA 6) und Adipodinitril mit Hexamethylendiamin (PA 66) durch sog. Direktpolymerisation in Anwesenheit von Wasser, wie beispielsweise in der DE-A 10313681, EP-A 1198491 und EP 922065 beschrieben.

Außerdem seien auch noch Polyamide erwähnt, die z.B. durch Kondensation von 1,4-Diaminobutan mit Adipinsäure unter erhöhter Temperatur erhältlich sind (Polyamid 4,6). Herstellungsverfahren für Polyamide dieser Struktur sind z.B. in den EP-A 38 094, EP-A 38 582 und EP-A 39 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist. Besonders bevorzugt sind Mischungen von Polyamid 66 mit anderen Polyamiden, insbesondere Copolyamide 6/66.

Weiterhin haben sich solche teilaromatischen Copolyamide wie PA 6/6T und PA 66/6T als besonders vorteilhaft erwiesen, deren Triamingehalt weniger als 0,5, vorzugsweise weniger als 0,3 Gew.-% beträgt (siehe EP-A 299 444). Weitere hochtemperaturbeständige Polyamide sind aus der EP-A 19 94 075 bekannt (PA 6T/6I/MXD6).

Die Herstellung der bevorzugten teilaromatischen Copolyamide mit niedrigem Triamingehalt kann nach den in den EP-A 129 195 und 129 196 beschriebenen Verfahren erfolgen.

Die nachfolgende nicht abschließende Aufstellung enthält die genannten, sowie weitere Polyamide A) im Sinne der Erfindung und die enthaltenen Monomeren.

### AB-Polymere:

- PA 6: ε-Caprolactam
- PA 7: Önantholactam
- PA 8: Capryllactam
- PA 9: 9-Aminopelargonsäure
- PA 11: 11-Aminoundecansäure
- PA 12: Laurinlactam

### AA/BB-Polymere

- PA 46: Tetramethylendiamin, Adipinsäure
- PA 66: Hexamethylendiamin, Adipinsäure
- PA 69: Hexamethylendiamin, Azelainsäure
- PA 610: Hexamethylendiamin, Sebacinsäure
- PA 612: Hexamethylendiamin, Decandicarbonsäure
- PA 613: Hexamethylendiamin, Undecandicarbonsäure
- PA 1212: 1,12-Dodecandiamin, Decandicarbonsäure
- PA 1313: 1,13-Diaminotridecan, Undecandicarbonsäure
- PA 6T: Hexamethylendiamin, Terephthalsäure
- PA 9T: 1,9-Nonandiamin, Terephthalsäure
- PA MXD6: m-Xylylendiamin, Adipinsäure
- PA 6I: Hexamethylendiamin, Isophthalsäure
- PA 6-3-T: Trimethylhexamethylendiamin, Terephthalsäure
- PA 6/6T: (siehe PA 6 und PA 6T)
- PA 6/66: (siehe PA 6 und PA 66)
- PA 6/12: (siehe PA 6 und PA 12)
- PA 66/6/610: (siehe PA 66, PA 6 und PA 610)
- PA 6I/6T: (siehe PA 6I und PA 6T)
- PA PACM 12: Diaminodicyclohexylmethan, Dodecandisäure
- PA 6I/6T/PACM: wie PA 6I/6T + Diaminodicyclohexylmethan
- PA 12/MACMI: Laurinlactam, Dimethyl-diaminodicyclohexylmethan, Isophthalsäure
- PA 12/MACMT: Laurinlactam, Dimethyl-diaminodicyclohexylmethan, Terephthalsäure
- PA PDA-T: Phenylendiamin, Terephthalsäure

- PA410: 1,4-Tetramethylendiamin, Sebacinsäure
- PA510: 1,5-Pentamethylendiamin, Sebacinsäure
- PA10T: 1,10-Decandiamin, Terephthalsäure

Als Komponente B) enthalten die erfindungsgemäßen Formmassen 1 bis 50, insbesondere 1 bis 30, vorzugsweise 3 bis 25 und insbesondere 5 bis 25 Gew.-% eines thermoplastischen Polyamides verschieden von A), enthaltend Einheiten, welche sich von 2-Pyrrolidon ableiten, das heißt mit den weiteren Wiederholungseinheiten gebundene 2-Pyrrolidon-Einheiten als Wiederholungseinheiten.
Gemäß Römpps Online Lexikon (April 2007) sind Synonyme für 2-Pyrrolidon: Pyrrolidin-2-on, 4-Aminobuttersäurelactam, γ-Butyrolactam, 2-Oxopyrrolidon.

Der Begriff "ableiten" bedeutet, dass die entstehende Wiederholungseinheit kein "reines" 2-Pyrrolidon darstellt, sondern durch die weiteren Wiederholungseinheiten substituiert ist bzw. mit diesen gebunden ist. (siehe auch US 4,418,189)
Derartige Polyamide B) sind erhältlich durch Polykondensation einer Monomermischung aus, bezogen auf 100 mol-% B1) und B2),
B1) 12,5 bis 50 mol-% , vorzugsweise 20 bis 50 mol-% Itakonsäure, wobei 0 bis 37,5 mol-%, vorzusweise 0 bis 30 mol% weiterer Dicarbonsäuren (verschieden von Itakonsäure) enthalten sein können,
B2) 12,5 bis 50 mol-%, vorzugsweise 20 bis 50 mol-% mindestens eines Diamins mit aromatischem Ring, wobei 0 bis 37,5 mol-%, vorzugsweise 0 bis 30 mol-%weiterer Diamine enthalten sein können.

Die Polykondensation wird wie allgemein üblich durchgeführt durch Mischen der Monomere in meist wässriger, oder überwiegend wässriger Lösung und anschließender Entfernung des Lösungsmittels bei vermindertem Druck und/oder erhöhter Temperatur. Die Temperaturen und Drücke betragen im Allgemeinen von 150 °C bis 320 °C vorzugsweise von 180 °C bis 280 °C sowie von 0 bis 30 bar. Die Verweilzeiten liegen im allgemeinen von 1h bis 30h, bevorzugt von 1h bis 20h.

Es entstehen je nach Monomerenverhältnis Blockstrukturen oder alternierende Strukturen in der Polymerkette, welche an folgenden bevorzugten Beispielen gezeigt werden sollen:

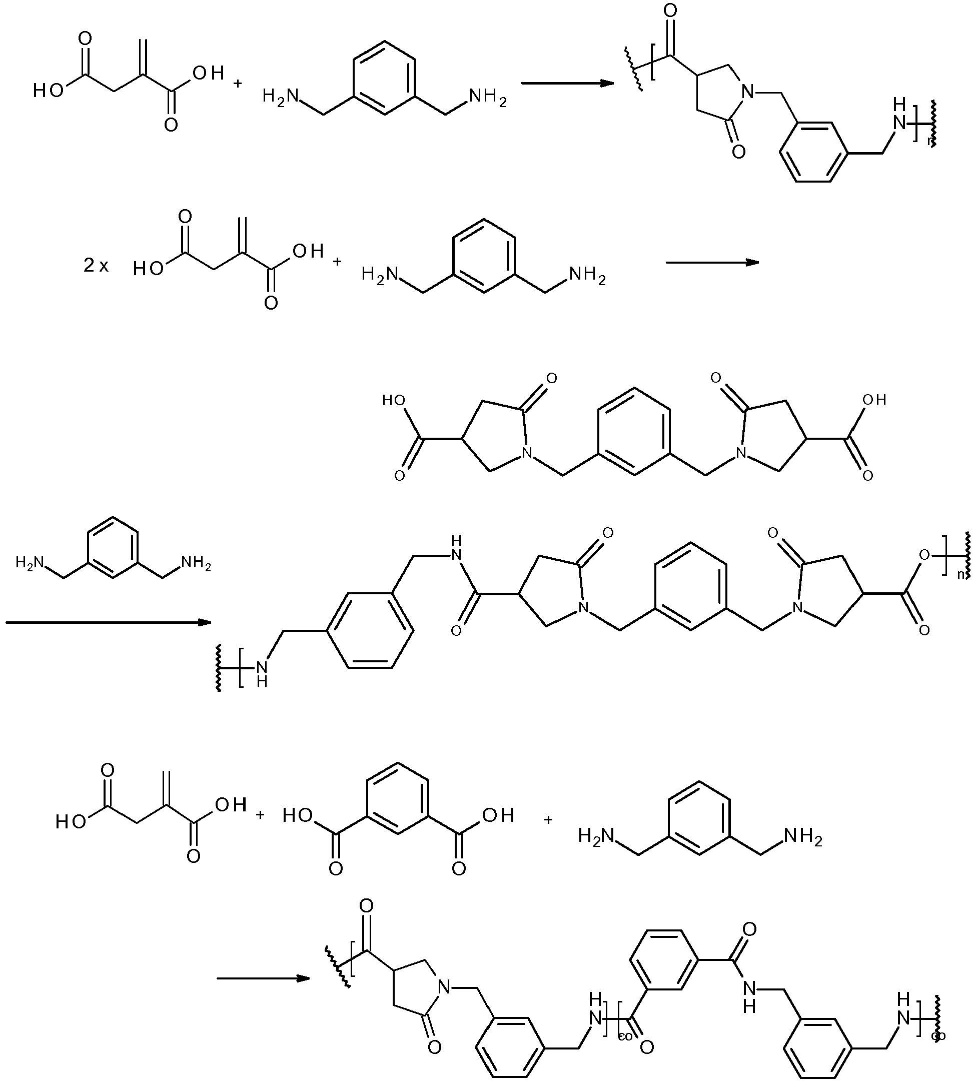

Die letzte Gleichung stellt ein Beispiel für ein bevorzugtes Copolyamid aus Itakonsäure/Terephthalsäure und m-Xylylendiamin dar.

Das Molgewicht der Komponenten B) beträgt im allgemeinen Mn (Zahlenmittel) der Komponente B) gemäß GPC (PMMA Standard und HFIP als Elutionsmittel) von 1000 bis 30000 g/mol vorzugsweise von1500 bis25000 g/mol, das Gewichtsmittel Mw beträgt in der Regel 2000 bis 150 000, vorzugsweise 2500 bis 100 000 g/mol bestimmt mittels GPC wie nachfolgend im Detail beschrieben.

Das Molekulargewicht Mn bzw Mw der Polyamide wurde wie folgt bestimmt:
15 mg der teilaromatischen Polyamide wurden in 10 ml Hexafluoroisopropanol (HFIP) gelöst. Jeweils 125 µl dieser Lösung wurden mittels Gelpermeationschromatographie (GPC) analysiert. Die Messungen wurden bei Raumtemperatur durchgeführt. Für die Elution wurde HFIP + 0,05 Gew.-% Trifluoroessigsäure-Ka-Salz verwendet. Die Elutionsgeschwindigkeit betrug 0,5 ml/min. Dabei wurde folgende Säulenkombination verwendet (alle Säulen hergestellt von Fa. Showa Denko Ltd., Japan): Shodex® HFIP-800P (Durchmesser 8 mm, Länge 5 cm), Shodex® HFIP-803 (Durchmesser 8 mm, Länge 30 cm), Shodex® HFIP-803 (Durchmesser 8 mm, Länge 30 cm). Die teilaromatischen Polyamide wurden mittels eines RI-Detektors (Differential-Refraktometrie) detektiert. Die Kalibrierung erfolgte mit eng verteilten Polymethylmethacrylat-Standards mit Molekulargewichten von Mₙ = 505 bis Mₙ = 2.740.000 g/mol.

Als aliphatische Dicarbonsäuren B1) und deren Derivate kommen im Allgemeinen solche mit 2 bis 40 Kohlenstoffatomen, vorzugsweise 4 bis 18 Kohlenstoffatomen, in Betracht. Sie können sowohl linear als auch verzweigt sein. Die im Rahmen der vorliegenden Erfindung verwendbaren cycloaliphatischen Dicarbonsäuren sind in der Regel solche mit 7 bis 10 Kohlenstoffatomen und insbesondere solche mit 8 Kohlenstoffatomen. Prinzipiell können jedoch auch Dicarbonsäuren mit einer größeren Anzahl an Kohlenstoffatomen, beispielsweise mit bis zu 30 Kohlenstoffatomen, eingesetzt werden.

Beispielhaft zu nennen sind: Malonsäure, Bernsteinsäure, Glutarsäure, 2-Methylglutar-säure, 3-Methylglutarsäure, Adipinsäure, Pimelinsäure, Korksäure, Azelainsäure, Sebacinsäure, Undecandisäure, Dodecandisäure, Brassylsäure, Tetradecandisäure, Octadecandisäure,Fumarsäure, 2,2-Dimethylglutarsäure, Suberinsäure, Dimerfettsäure (wie z.B. Empol® 1061 der Fa. BASF), 1,3-Cyclopentandicarbonsäure, 1,4-Cyclohexandicarbonsäure, 1,3-Cyclohexandicarbonsäure, Diglykolsäure, Maleinsäure, Maleinsäureanhydrid und 2,5-Norbornandicarbonsäure.

Als esterbildende Derivate der oben genannten aliphatischen oder cycloaliphatischen Dicarbonsäuren, die ebenso verwendbar sind, sind insbesondere die Di-C₁- bis C₆-Alkylester, wie Dimethyl-, Diethyl-, Di-n-propyl, Di-isopropyl, Di-n-butyl, Di-iso-butyl, Di-t-butyl, Di-n-pentyl-, Di-iso-pentyl oder Di-n-hexylester zu nennen. Anhydride der Dicarbonsäuren können ebenfalls eingesetzt werden.

Dabei können die Dicarbonsäuren oder deren esterbildenden Derivate, einzeln oder als Gemisch aus zwei oder mehr davon eingesetzt werden.

Bevorzugt werden Bernsteinsäure, Adipinsäure, Azelainsäure, Sebacinsäure, Brassylsäure oder deren jeweilige esterbildenden Derivate oder Mischungen davon eingesetzt. Besonders bevorzugt werden Bernsteinsäure, Adipinsäure oder Sebacinsäure oder deren jeweilige esterbildende Derivate oder Mischungen davon eingesetzt.
Insbesondere bevorzugt wird Adipinsäure oder deren esterbildende Derivate, wie deren Alkylester oder deren Mischungen eingesetzt. Als aliphatische Dicarbonsäuren werden Sebacinsäure oder Mischungen von Sebacinsäure mit Adipinsäure bevorzugt eingesetzt

Als aromatische Dicarbonsäure sind im Allgemeinen solche mit 6 bis 12 Kohlenstoffatomen und vorzugsweise solche mit 8 Kohlenstoffatomen zu nennen. Beispielhaft erwähnt seien Terephthalsäure, Isophthalsäure, Phthalsäure, 2,5-Furandicarbonsäure, 5-Natriumsulfoisophthalsäure, 2,6-Naphthalendicarbonsäure, 1,4-Naphthalendicarbonsäure, 1,8-Naphthalendicarbonsäure, 1,5-Naphthalendicarbonsäure und Anthracendicarbonsäure sowie esterbildende Derivate davon. Dabei sind insbesondere die Di-C₁-C₆-Alkylester, z.B. Dimethyl-, Diethyl-, Di-n-propyl-, Di-iso-propyl, Di-n-butyl-, Di-iso-butyl, Di-t-butyl, Di-n-pentyl-, Di-iso-pentyl oder Di-n-hexylester zu nennen. Die Anhydride der Dicarbonsäuren a2 sind ebenso geeignete esterbildende Derivate.

Prinzipiell können jedoch auch aromatische Dicarbonsäuren mit einer größeren Anzahl an Kohlenstoffatomen, beispielsweise bis zu 20 Kohlenstoffatomen, eingesetzt werden.

Die aromatischen Dicarbonsäuren oder deren esterbildende Derivate B1) können einzeln oder als Gemisch aus zwei oder mehr davon eingesetzt werden. Besonders bevorzugt werden Terephthalsäure oder deren esterbildende Derivate wie Dimethylterephthalat, verwendet.

Es ist auch üblich, sulfonatgruppenhaltige Verbindungen wie ein Alkali- oder Erdalkalimetallsalz einer sulfonatgruppenhaltigen Dicarbonsäure oder deren esterbildende Derivate einzusetzen. Bevorzugt sind Alkalimetallsalze der 5-Sulphoisophthalsäure oder deren Mischungen, besonders bevorzugt das Natriumsalz.

Die Monomeren der Polyamide B) enthalten als Komponente B2) Diamine mit aromatischem Ring mit 6 bis 30 C- Atomen ausgewählt aus der Gruppe m-Xylylendiamin, p-Xylylendiamin, m- oder p- Phenylendiamin, 4,4'Oxydianilin, 4,4'Methylenbisbenzylamin, 1,1'-Biphenyl-4,4'diamin, 2,5-bis(aminomethyl)furan oder deren Mischungen, wobei m-und p-Xylylendiamin bevorzugt sind.

Im Allgemeinen können diese Diamine B2) in Mischung vorliegen oder in Mischung mit verzweigten oder linearen Alkandiaminen mit 2 bis 18 Kohlenstoffatomen.

Beispiele geeigneter Alkandiamin sind 1,2-Ethylendiamin, 1,2-Propandiamin, 1,3-Propandiamin, 1,2-Butandiamin,1,3-Butandiamin, 1,4-Butandiamin, 1,5-Pentandiamin, 2-Methyl-1,5-Pentandiamin, 1,6-Hexandiamin, 2,4-Dimethyl-2-ethylhexan-1,3-diamin, 2,2-Dimethyl- 1,3-propandiamin, 2-Ethyl-2-butyl-1,3-propandiamin, 2-Ethyl-2-isobutyl- 1,3-propandiamin, 2,2,4-Trimethyl-1,6-hexandiamin, insbesondere Ethylendiamin, 1,3-Propandiamin, 1,4-Butandiamin und 2,2-Dimethyl-1,3-propandiamin (Neopentyldiamin); Cyclopentandiamin, 1,4-Cyclohexandiamin, 1,2-Cyclohexandimethanol, 1,3-Cyclohexandimethanol, 1,4-Cyclohexandimethanol, 2,5-bis(aminomethyl)-tetrahydrofuran, 4,4'-Methylenebiscyclohexanamin, 4,4'-Methylenebis-(2-Methyl-cyclohexanamin),oder2,2,4,4-Tetramethyl-1,3-cyclobutandiamin. Es können auch Mischungen unterschiedlicher Alkandiamine verwendet werden.

Bevorzugte Kombinationen - in den vorstehend genannten Mengenverhältnissen- der Monomeren B1) und B2) sind Itakonsäure mit m- oder p- Xylylendiamin oder 2,5 bis(Aminomethyl)furan oder deren Mischungen.

Der Gehalt der Komponente C) in den erfindungsgemäßen Formmassen beträgt 0 bis 40, bevorzugt 1 bis 30 und insbesondere 2 bis 25 und insbesondere 2 bis 18 Gew.-%, bezogen auf die Summe der Komponenten A) bis E).

Bevorzugtes halogenfreies Flammschutzmittel C) ist elementarer roter Phosphor, insbesondere in Kombination mit glasfaserverstärkten Formmassen, der in unbehandelter Form eingesetzt werden kann.

Besonders eignen sich jedoch Zubereitungen, in denen der Phosphor oberflächlich mit niedermolekularen flüssigen Substanzen wie Silikonöl, Paraffinöl oder Estern der Phthalsäure (insbesondere Dioctylphthalat, s. EP 176 836) oder Adipinsäure oder mit polymeren oder oligomeren Verbindungen, z.B. mit Phenolharzen oder Aminoplasten sowie Polyurethanen beschichtet ist (s. EP-A 384 232, DE-A 196 48 503). Derartige sogenannte Phlegmatisierungsmittel sind in der Regel in Mengen von 0,05 bis 5 Gew.-%, bezogen auf 100 Gew.-% B) enthalten.

Außerdem sind Konzentrate von rotem Phosphor, z.B. in einem Polyamid A) oder Elastomeren E) als Flammschutzmittel geeignet. Insbesondere eignen sich Polyolefinhomo- und -copolymere als Konzentratpolymere. Jedoch sollte der Anteil des Konzentratpolymeren -falls kein Polyamid als Thermoplast eingesetzt wird- nicht mehr als 35 Gew.-% bezogen auf das Gewicht der Komponenten A) bis E) in der erfindungsgemäßen Formmassen betragen.

Bevorzugte Konzentratzusammensetzungen sind
B₁) 30 bis 90 Gew.-%, vorzugsweise von 45 bis 70 Gew.-% eines Polyamids oder Elastomeren,
B₂) 10 bis 70 Gew.-%, vorzugsweise von 30 bis 55 Gew.-% roter Phosphor.

Das eingesetzte Polyamid für den Batch kann verschieden von A) sein oder bevorzugt gleich A) sein, damit Unverträglichkeiten oder Schmelzpunktdifferenzen keine negative Auswirkung auf die Formmasse aufweisen.
Die mittlere Teilchengröße (d₅₀) der in den Formmassen verteilten Phosphorpartikel liegt bevorzugt im Bereich von 0,0001 bis 0,5 mm; insbesondere von 0,001 bis 0,2 mm.

Als Komponente C) können die erfindungsgemäßen Formmassen 0 bis 40, vorzugsweise 1 bis 30, vorzugsweise 1 bis 15 und insbesondere 5 bis 10 Gew.-%, bezogen auf A) bis E) eines Phosphinsäuresalzes als halogenfreies Flammschutzmittel enthalten.

Als Komponente C) eignen sich Phosphinsäuresalze der Formel (I) oder/und Diphosphinsäuresalze der Formel (II) oder deren Polymere 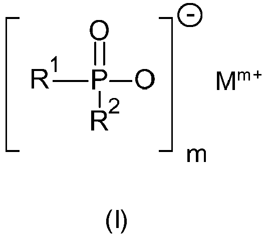 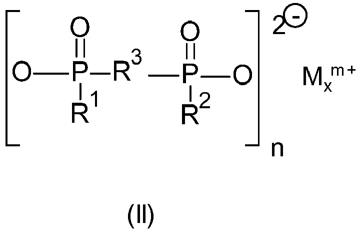 worin
- R¹, R²: gleich oder verschieden sind und Wasserstoff, C₁-C₆-Alkyl, linear oder verzweigt und/oder Aryl;
- R³: C₁-C₁₀-Alkylen, linear oder verzweigt, C₆-C₁₀-Arylen, -Alkylarylen oder -Arylalkylen;
- M: Mg, Ca, Al, Sb, Sn, Ge, Ti, Zn, Fe, Zr, Ce, Bi, Sr, Mn, Li, Na, K und/oder eine protonierte Stickstoffbase;
- m: 1 bis 4; n 1 bis 5; x 1 bis 4 bedeuten, vorzugsweise m = 3, x = 3.

Bevorzugt sind R¹, R² der Komponente B gleich oder verschieden und bedeuten Wasserstoff, Methyl, Ethyl, n-Propyl, Iso-Propyl, n-Butyl, tert.-Butyl, n-Pentyl und/oder Phenyl.

Bevorzugt bedeutet R³ der Komponente B Methylen, Ethylen, n-Propylen, Iso-Propylen, n-Butylen, tert.-Butylen, n-Pentylen, n-Octylen oder n-Dodecylen, Phenylen oder Naphthylen; Methylphenylen, Ethyl-phenylen, tert.-Butylphenylen, Methyl-naphthylen, Ethyl-naphthylen oder tert.-Butylnaphthylen; Phenyl-methylen, Phenyl-ethylen, Phenyl-propylen oder Phenyl-butylen.

Besonders bevorzugt ist R¹, R² Wasserstoff, Methyl, Ethyl und M = Al, wobei Al-hypophosphit besonders bevorzugt ist.

Die Herstellung der Phosphinate erfolgt vorzugsweise durch Ausfällen der entsprechenden Metallsalze aus wässrigen Lösungen. Die Phosphinate können jedoch auch in Gegenwart eines geeigneten anorganischen Metalloxids oder -sulfids als Trägermaterials (Weißpigmente, wie z.B. TiO₂, SnO₂, ZnO, ZnS, SiO₂) gefällt werden. Man erhält somit oberflächenmodifizierte Pigmente, die als lasermarkierbare Flammschutzmittel für thermoplastische Polyester verwendet werden können.

Als Komponente C) können die erfindungsgemäßen Formmassen 0 bis 40, vorzugsweise 1 bis 30, vorzugsweise 1 bis 15 und insbesondere 3 bis 12 Gew.-% eines stickstoffhaltigen Flammschutzmittels, vorzugsweise einer Melaminverbindung enthalten.

Das gemäß der Erfindung (Komponente C) bevorzugt geeignete Melamincyanurat ist ein Reaktionsprodukt aus vorzugsweise äquimolaren Mengen von Melamin (Formel I) und Cyanursäure bzw. Isocyanursäure (Formeln la und Ib)

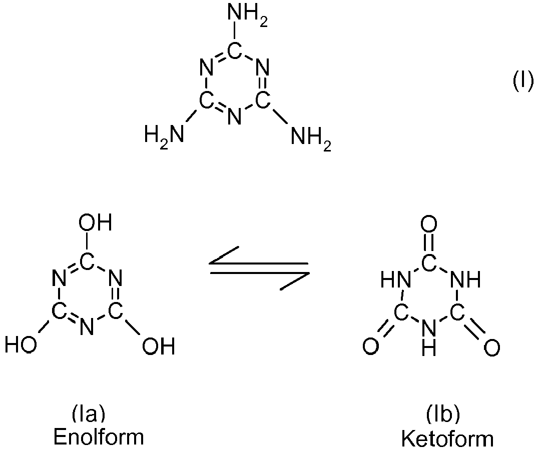

Man erhält es z.B. durch Umsetzung von wässrigen Lösungen der Ausgangsverbindungen bei 90 bis 100°C. Das im Handel erhältliche Produkt ist ein weißes Pulver mit einer mittleren Korngröße d₅₀ von 1,5 - 7 µm und einem d₉₉ Wert kleiner 50µm_{.}

Weitere geeignete Verbindungen (oft auch als Salze oder Addukte bezeichnet) sind Melaminsulfat, Melamin, Melaminborat, -oxalat, -phosphat prim., -phosphat sec. und -pyrophosphat sec., Neopentylglycolborsäuremelamin sowie polymeres Melaminphosphat (CAS-Nr 56386-64-2 bzw. 218768-84-4).

Bevorzugt sind Melaminpolyphosphatsalze einer 1,3,5-Triazinverbindung, deren Zahl n des durchschnittlichen Kondensationsgrades zwischen 20 und 200 liegt und der 1,3,5-Triazingehalt 1,1 bis 2,0 mol einer 1,3,5-Triazinverbindung, ausgewählt aus der Gruppe, bestehend aus Melamin, Melam, Melem, Melon, Ammelin, Ammelid, 2-Ureidomelamin, Acetoguanamin, Benzoguanamin und Diaminphenyltriazin, pro Mol Phosphoratom beträgt. Bevorzugt beträgt der n-Wert solcher Salze im Allgemeinen zwischen 40 und 150 und das Verhältnis einer 1,3,5-Triazinverbindung pro Mol Phosphoratom vorzugsweise zwischen 1,2 und 1,8. Desweiteren wird der pH einer 10 gew.-%igen wässrigen Aufschlämmung von Salzen, hergestellt gemäß EP-B1095030 im Allgemeinen mehr als 4,5 und vorzugsweise mindestens 5,0, betragen. Der pH-Wert wird üblicherweise bestimmt, indem 25 g des Salzes und 225 g sauberes Wasser von 25°C in einen 300-ml-Becher gegeben werden, die resultierende wäßrige Aufschlammung für 30 Minuten gerührt und dann der pH gemessen wird. Der o.g. n-Wert, der zahlenmittlere Kondensationsgrad, kann mittels 31P-Feststoff-NMR bestimmt werden. Aus J. R. van Wazer, C. F. Callis, J. Shoolery und R. Jones, J. Am. Chem. Soc., 78, 5715, 1956, ist bekannt, dass die Anzahl benachbarter Phosphatgruppen eine einzigartige, chemische Verschiebung angibt, die die klare Unterscheidung zwischen Orthophosphaten, Pyrophosphaten und Polyphosphaten ermöglicht. In EP1095030B1 ist außerdem ein Verfahren zur Herstellung des gewünschten Polyphosphatsalzes einer 1,3,5-Triazinverbindung, die einen n-Wert von 20 bis 200 aufweist und deren 1,3,5- Triazingehalt 1,1 bis 2,0 mol einer 1,3,5- Triazinverbindung betragt, beschrieben. Dieses Verfahren umfaßt die Umwandlung einer 1,3,5-Triazinverbindung mit Orthophosphorsaure in ihr Orthophosphatsalz, gefolgt von Dehydratisierung und Warmebehandlung, um das Orthophosphatsalz in ein Polyphosphat der 1,3,5-Triazinverbindung umzuwandeln. Diese Wärmebehandlung wird vorzugsweise bei einer Temperatur von mindestens 300°C, und vorzugsweise bei mindestens 310°C, durchgeführt. Zusätzlich zu Orthophosphaten von 1,3,5-Triazinverbindungen können ebenso andere 1,3,5-Triazinphosphate verwendet werden, einschließlich beispielsweise ein Gemisch aus Orthophosphaten und Pyrophosphaten.

### Geeignete Guanidinsalze sind:

| | CAS-Nr. |
|---|---|
| G-carbonat | 593-85-1 |
| G-cyanurat prim. | 70285-19-7 |
| G-phosphat prim. | 5423-22-3 |
| G-phosphat sec. | 5423-23-4 |
| G-sulfat prim. | 646-34-4 |
| G-sulfat sec. | 594-14-9 |
| Pentaerythritborsäureguanidin | N.A. |
| Neopentylglycolborsäureguanidin | N.A. |
| sowie Harnstoffphosphat grün | 4861-19-2 |
| Harnstoffcyanurat | 57517-11-0 |
| Ammelin | 645-92-1 |
| Ammelid | 645-93-2 |
| Melem | 1502-47-2 |
| Melon | 32518-77-7 |

Unter Verbindungen im Sinne der vorliegenden Erfindung sollen sowohl z.B. Benzoguanamin selbst und dessen Addukte bzw. Salze als auch die am Stickstoff substituierten Derivate und dessen Addukte bzw. Salze verstanden werden.

Weiterhin geeignet sind Ammoniumpolyphosphat (NH₄PO₃)ₙ mit n ca. 200 bis 1000 bevorzugt 600 bis 800, und Tris(hydroxyethyl)isocyanurat (THEIC) der Formel IV 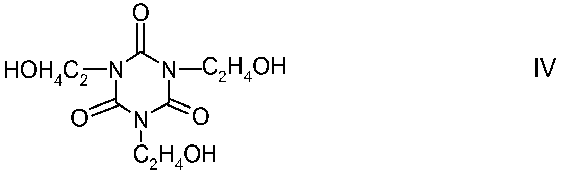 oder dessen Umsetzungsprodukte mit aromatischen Carbonsäuren Ar(COOH)ₘ, welche gegebenenfalls in Mischung miteinander vorliegen können, wobei Ar ein ein-, zwei- oder dreikerniges aromatisches Sechsringsystem bedeutet und m 2, 3 oder 4 ist.

Geeignete Carbonsäuren sind beispielsweise Phthalsäure, Isophthalsäure, Terephthalsäure, 1,3,5-Benzoltricarbonsäure, 1,2,4-Benzoltricarbonsäure, Pyromellithsäure, Mellophansäure, Prehnitsäure, 1-Naphthoesäure, 2-Naphthoesäure, Naphthalindicarbonsäuren und Anthracencarbonsäuren.

Die Herstellung erfolgt durch Umsetzung des Tris(hydroxyethyl)isocyanurats mit den Säuren, ihren Alkylestern oder ihren Halogeniden gemäß den Verfahren der EP-A 584 567.
Derartige Umsetzungsprodukte stellen ein Gemisch von monomeren und oligomeren Estern dar, welche auch vernetzt sein können. Der Oligomerisierungsgrad beträgt üblicherweise 2 bis ca. 100, vorzugsweise 2 bis 20. Bevorzugt werden Mischungen von THEIC und/oder dessen Umsetzungsprodukte mit phosphorhaltigen Stickstoffverbindungen, insbesondere (NH₄PO₃)ₙ oder Melaminpyrophosphat oder polymeres Melaminphosphat eingesetzt. Das Mischungsverhältnis z.B. von (NH₄PO₃)ₙ zu THEIC beträgt vorzugsweise 90 bis 50 zu 10 bis 50, insbesondere 80 bis 50 zu 50 bis 20 Gew.-%, bezogen auf die Mischung derartiger Komponenten B1).

Weiterhin geeignet sind Benzoguanamin-Verbindungen der Formel V 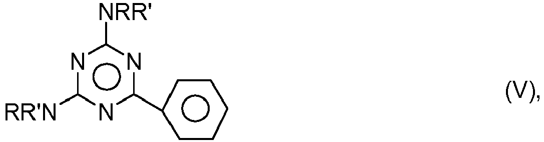 in der R,R' geradkettige oder verzweigte Alkylreste mit 1 bis 10 C-Atomen, bevorzugt Wasserstoff bedeutet und insbesondere deren Addukte mit Phosphorsäure, Borsäure und/oder Pyrophosphorsäure.

Bevorzugt sind ferner Allantoin-Verbindungen der Formel VI 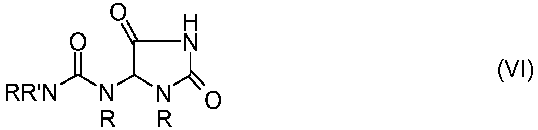 wobei R,R' die in Formel V angegebene Bedeutung haben sowie deren Salze mit Phosphorsäure, Borsäure und/oder Pyrophosphorsäure sowie Glycolurile der Formel VII oder dessen Salze mit den o.g. Säuren 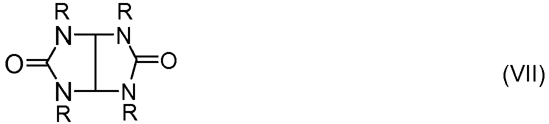 in der R die in Formel V genannte Bedeutung hat.

Geeignete Produkte sind im Handel oder gemäß DE-A 196 14 424 erhältlich.

Das gemäß der Erfindung verwendbare Cyanguanidin (Formel VIII) erhält man z.B. durch Umsetzung von Kalkstickstoff (Calciumcyanamid) mit Kohlensäure, wobei das entstehende Cyanamid bei pH 9 bis 10 zu Cyanguanidin dimerisiert.

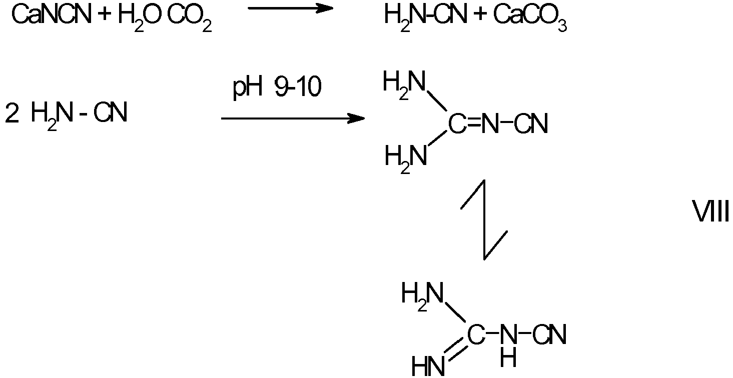

Das im Handel erhältliche Produkt ist ein weißes Pulver mit einem Schmelzpunkt von 209°C bis 211°C.

Ganz besonders bevorzugt wird erfindungsgemäß Melamincyanurat eingesetzt, dessen Teilchengrößenverteilung bevorzugt beträgt:
d₉₈ < 25 µm, bevorzugt < 20 µm
d₅₀ < 4,5 µm, bevorzugt < 3 µm.

Unter einem d₅₀-Wert versteht der Fachmann in der Regel den Teilchengrößenwert, bei welchem 50 % der Teilchen eine kleinere Teilchengröße aufweisen und 50 % eine größere Teilchengröße aufweisen.

Die Teilchengrößenverteilung wird üblicherweise durch Laserbeugung bestimmt (analog ISO 13320).

Als faser- oder teilchenförmige Füllstoffe D) seien Kohlenstofffasern, Glasfasern, Glaskugeln, amorphe Kieselsäure, Calciumsilicat, Calciummetasilicat, Magnesiumcarbonat, Kaolin, Kreide, gepulverter Quartz, Glimmer, Bariumsulfat und Feldspat genannt, die in Mengen 0 bis 50, bevorzugt von 5 bis 50 Gew.-%, insbesondere 10 bis 40 Gew.-% eingesetzt werden können.

Als bevorzugte faserförmige Füllstoffe seien Kohlenstofffasern, Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Die faserförmigen Füllstoffe können zur besseren Verträglichkeit mit den Thermoplasten mit einer Silanverbindung oberflächlich vorbehandelt sein.

Geeignete Silanverbindungen sind solche der allgemeinen Formel

(X-(CH₂)ₙ)ₖ-Si-(O-CₘH₂ₘ₊₁)₄₋ₖ

in der die Substituenten folgende Bedeutung haben: X NH₂-, 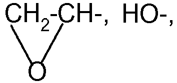
- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1

Bevorzugte Silanverbindungen sind Aminopropyltrimethoxysilan, Aminobutyltrimeth-oxysilan, Aminopropyltriethoxysilan, Aminobutyltriethoxysilan sowie die entsprechenden Silane, welche als Substituent X eine Glycidylgruppe enthalten.

Die Silanverbindungen werden im Allgemeinen in Mengen von 0,01 bis 2, vorzugsweise 0,025 bis 1,0 und insbesondere 0,05 bis 0,5 Gew.-% (bezogen auf D)) zur Oberflächenbeschichtung eingesetzt.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als weitere Füllstoffe seien Kaolin, calciniertes Kaolin, Wollastonit, Talkum und Kreide, prezipitierter Kalzit, genannt sowie zusätzlich plättchen- oder nadelförmige Nanofüllstoffe bevorzugt in Mengen zwischen 0,1 und 10 %. Bevorzugt werden hierfür Mica, Böhmit, Bentonit, Montmorillonit, Vermicullit, Zinkoxid in Nadelform und Hektorit eingesetzt. Um eine gute Verträglichkeit der plättchenförmigen Nanofüllstoffe mit dem organischen Bindemittel zu erhalten, werden die plättchenförmigen Nanofüllstoffe nach dem Stand der Technik organisch modifiziert. Der Zusatz der plättchen- oder nadelförmigen Nanofüllstoffe zu den erfindungsgemäßen Nanokompositen führt zu einer weiteren Steigerung der mechanischen Festigkeit.

Als Komponente E) können die Formmassen in Mengen von 0 bis 30 bevorzugt 0 bis 20 Gew-% weiterer Zusatzstoffe enthalten. Hierbei kommen in Mengen von 1 bis 10, bevorzugt 0,5 bis 10, insbesondere 1 bis 8 Gew.-% kautschukelastische Polymerisate in Betracht (oft auch als Schlagzähmodifier, Elastomere oder Kautschuke bezeichnet).

Ganz allgemein handelt es sich dabei um Copolymerisate, die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag, Stuttgart, 1961), Seiten 392 bis 406 und in der Monographie von C.B. Bucknall "Toughened Plastics" (Applied Science Publishers, London, 1977) beschrieben.

Im Folgenden werden einige bevorzugte Arten solcher Elastomerer vorgestellt:
Bevorzugte Komponente E) sind Schlagzähmodifier auf Basis von Ethylencopolymeren, welche aufgebaut sind aus:
E₁) 40 bis 98 Gew.-%, bevorzugt 50 bis 94,5 Gew.-% Ethylen
E₂) 2 bis 40 Gew.-%, bevorzugt 5 bis 40 Gew.-% eines (Meth)Acrylates mit 1 bis 18 C-Atomen, oder/und
E₃) 0 bis 20 Gew.-%, bevorzugt 0,05 bis 10 Gew.-% funktioneller Monomerer, ausgewählt aus der Gruppe der ethylenisch ungesättigten Mono- oder Dicarbonsäuren oder der Carbonsäureanhydride oder Epoxidgruppen oder deren Mischungen, wobei die Summe der Gewichtsprozente E₁) bis E₃) 100 % ergibt.
   oder
ein Ethylen-(Meth)acrylsäure Copolymer, welches bis zu 72 % mit Zink neutralisiert ist.

Besonders bevorzugt sind Ethylencopolymere, aufgebaut aus:
E₁) 50 bis 69,9 Gew.-% Ethylen
E₂) 30 bis 40 Gew.-% eines (Meth)Acrylates mit 1 bis 18 C-Atomen
E₃) 0,1 bis 10 Gew.-% funktioneller Monomerer gemäß Anspruch 1,
wobei die Summe der Gewichtsprozente E₁) bis E₃) 100 % ergibt.

Der Anteil der funktionellen Gruppen E₃) beträgt 0,05 bis 5, vorzugsweise 0,2 bis 4 und insbesondere 0,3 bis 3,5 Gew.-%, bezogen auf 100 Gew.-% E).

Besonders bevorzugte Komponenten E₃) sind aus einer ethylenisch ungesättigten Mono- oder Dicarbonsäure oder einem funktionellen Derivat einer solchen Säure aufgebaut.

Grundsätzlich eignen sich alle primären, sekundären und tertiären C₁-C₁₈-Alkylester der Acrylsäure oder Methacrylsäure D₂, doch werden Ester mit 1 - 12 C-Atomen, insbesondere mit 2 - 10 C-Atomen bevorzugt.

Beispiele hierfür sind Methyl-, Ethyl-, Propyl-, n-, i-Butyl- und t-Butyl-, 2-Ethylhexyl, Octyl- und Decylacrylate bzw. die entsprechenden Ester der Methacrylsäure. Von diesen werden n-Butylacrylat und 2-Ethylhexylacrylat besonders bevorzugt.

Zusätzlich zu den Estern können in den Olefinpolymerisaten auch säurefunktionelle und/oder latent säurefunktionelle Monomere ethylenisch ungesättigter Mono- oder Dicarbonsäuren oder Epoxygruppen aufweisende Monomere enthalten sein.
Als weitere Beispiele für Monomere E₃) seien Acrylsäure, Methacrylsäure, tertiäre Alkylester dieser Säuren, insbesondere Butylacrylat und Dicarbonsäuren wie Maleinsäure und Fumarsäure oder Anhydride dieser Säuren sowie deren Monoester genannt.

Als latent säurefunktionelle Monomere sollen solche Verbindungen verstanden werden, die unter den Polymerisationsbedingungen bzw. bei der Einarbeitung der Olefinpolymerisate in die Formmassen freie Säuregruppen bilden. Als Beispiele hierfür seien Anhydride von Dicarbonsäuren mit bis zu 20 C-Atomen, insbesondere Maleinsäureanhydrid und tertiäre C₁-C₁₂-Alkylester der vorstehend genannten Säuren, insbesondere tert.-Butylacrylat und tert.-Butylmethacrylat angeführt.

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur.

Der Schmelzindex der Ethylencopolymeren liegt im Allgemeinen im Bereich von 1 bis 80 g/10 min (gemessen bei 190°C und 2,16 kg Belastung).

Das Molekulargewicht dieser Ethylen-Copolymeren liegt zwischen 10.000 und 500.000 g/mol, bevorzugt zwischen 15.000 und 400.000 g/mol (Mn, bestimmt mittels GPC in 1,2,4-Trichlorbenzol mit PS-Eichung).

Bevorzugt eingesetzte Handelsprodukte sind Fusabond® A 560, Lucalen® A 2910, Lucalen® A 3110, Nucrel 3990, Nucrel 925, Lotader A x 9800, 3 getabond FS 7 M.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. Blackley in der Monographie "Emulsion Polymerization" beschrieben wird. Die verwendbaren Emulgatoren und Katalysatoren sind an sich bekannt.

Insbesondere bevorzugt sind Copolymerisate, welche keine Einheiten E₂) enthalten, jedoch die Säurekomponente E₃) mit Zn neutralisiert wurde. Hierbei sind Ethylen-(Meth)acrylsäure-Copolymere bevorzugt, welche bis zu 72 % mit Zink neutralisiert wurden (im Handel als Surlyn® 9520 der Firma Dupont erhältlich).

Selbstverständlich können auch Mischungen der vorstehend aufgeführten Kautschuktypen eingesetzt werden.

Weitere Zusatzstoffe E) können in Mengen bis zu 30, bevorzugt bis zu 20 Gew.-% enthalten sein.

Als Komponente E) können die erfindungsgemäßen Formmassen 0,05 bis 3, vorzugsweise 0,1 bis 1,5 und insbesondere 0,1 bis 1 Gew.-% eines Schmiermittels enthalten.

Bevorzugt sind Al-, Alkali-, Erdalkalisalze oder Ester- oder Amide von Fettsäuren mit 10 bis 44 C-Atomen, vorzugsweise mit 12 bis 44 C-Atomen.
Die Metallionen sind vorzugsweise Erdalkali und Al, wobei Ca oder Mg besonders bevorzugt sind.
Bevorzugte Metallsalze sind Ca-Stearat und Ca-Montanat sowie Al-Stearat.
Es können auch Mischungen verschiedener Salze eingesetzt werden, wobei das Mischungsverhältnis beliebig ist.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitat, Glycerintrilaurat, Glycerinmonobehenat und Pentaerythrittetrastearat.

Es können auch Mischungen verschiedener Ester oder Amide oder Ester mit Amiden in Kombination eingesetzt werden, wobei das Mischungsverhältnis beliebig ist.

Als Komponente E) können die erfindungsgemäßen Formmassen 0,05 bis 3, vorzugsweise 0,1 bis 1,5 und insbesondere 0,1 bis 1 Gew.-% eines Cu-Stabilisators, vorzugsweise eines Cu-(I)-

Halogenids, insbesondere in Mischung mit einem Alkalihalogenid, vorzugsweise KJ, insbesondere im Verhältnis 1 : 4, enthalten.

Als Salze des einwertigen Kupfers kommen vorzugsweise Cu-(I)-Komplexe mit PPh₃, Kupfer(I)-Acetat, Kupfer(I)-Chlorid, -Bromid und -Jodid in Frage. Diese sind in Mengen von 5 bis 500 ppm Kupfer, vorzugsweise 10 bis 250 ppm, bezogen auf Polyamid, enthalten.

Die vorteilhaften Eigenschaften werden insbesondere erhalten, wenn das Kupfer in molekularer Verteilung im Polyamid vorliegt. Dies wird erreicht, wenn man der Formmasse ein Konzentrat zusetzt, das Polyamid, ein Salz des einwertigen Kupfers und ein Alkalihalogenid in Form einer festen, homogenen Lösung enthält. Ein typisches Konzentrat besteht z.B. aus 79 bis 95 Gew.-% Polyamid und 21 bis 5 Gew.-% eines Gemisches aus Kupferjodid oder -bromid und Kaliumjodid. Die Konzentration der festen homogenen Lösung an Kupfer liegt bevorzugt zwischen 0,3 und 3, insbesondere zwischen 0,5 und 2 Gew.-%, bezogen auf das Gesamtgewicht der Lösung und das molare Verhältnis von Kupfer(I)-Jodid zu Kaliumjodid liegt zwischen 1 und 11,5, vorzugsweise zwischen 1 und 5.
Geeignete Polyamide für das Konzentrat sind Homopolyamide und Copolyamide, insbesondere Polyamid 6 und Polyamid 6.6.
Als sterisch gehinderte Phenole E) eignen sich prinzipiell alle Verbindungen mit phenolischer Struktur, die am phenolischen Ring mindestens eine sterisch anspruchsvolle Gruppe aufweisen.

Vorzugsweise kommen z.B. Verbindungen der Formel 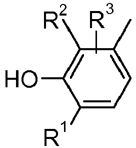 in Betracht, in der bedeuten:
R¹ und R² eine Alkylgruppe, eine substituierte Alkylgruppe oder eine substituierte Triazolgruppe, wobei die Reste R¹ und R² gleich oder verschieden sein können und R³ eine Alkylgruppe, eine substituierte Alkylgruppe, eine Alkoxigruppe oder eine substituierte Aminogruppe.

Antioxidantien der genannten Art werden beispielsweise in der DE-A 27 02 661 (US- 4 360 617) beschrieben.

Eine weitere Gruppe bevorzugter sterisch gehinderter Phenole leiten sich von substituierten Benzolcarbonsäuren ab, insbesondere von substituierten Benzolpropionsäuren.

Besonders bevorzugte Verbindungen aus dieser Klasse sind Verbindungen der Formel 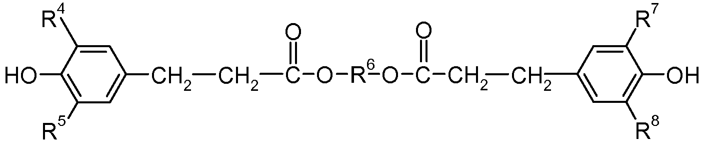 wobei R⁴, R⁵, R⁷ und R⁸ unabhängig voneinander C₁-C₈-Alkylgruppen darstellen, die ihrerseits substituiert sein können (mindestens eine davon ist eine sterisch anspruchsvolle Gruppe) und R⁶ einen zweiwertigen aliphatischen Rest mit 1 bis 10 C-Atomen bedeutet, der in der Hauptkette auch C-O-Bindungen aufweisen kann.

Bevorzugte Verbindungen, die dieser Formel entsprechen, sind 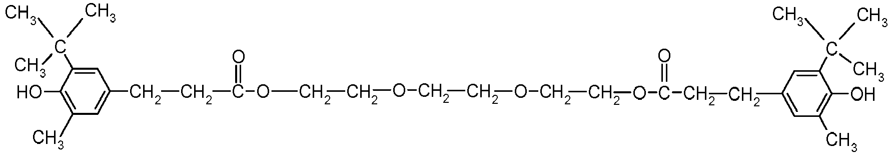 (Irganox® 245 der Firma BASF SE) 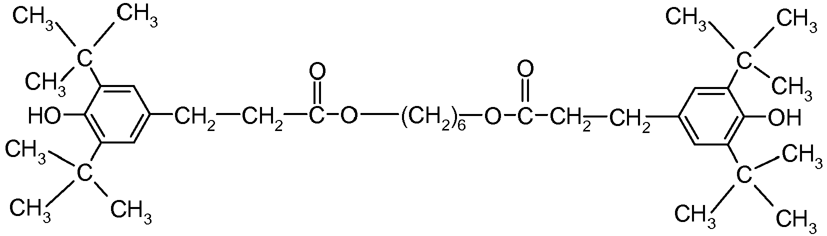 (Irganox® 259 der Firma BASF SE)

### Beispielhaft genannt seien insgesamt als sterisch gehinderte Phenole:

2,2'-Methylen-bis-(4-methyl-6-tert.-butylphenol), 1,6-Hexandiol-bis[3-(3,5-di-tert.-butyl-4-hydroxyphenyl)-propionat], Pentaerythril-tetrakis-[3-(3,5-di-tert.-butyl-4-hydroxy-phenyl)-propionat], Distearyl-3,5-di-tert.-butyl-4-hydroxybenzylphosphonat, 2,6,7-Trioxa-1-phosphabicyclo-[2.2.2]oct-4-yl-methyl-3,5-di-tert.-butyl-4-hydroxyhydro-cinnamat, 3,5-Di-tert.-butyl-4-hydroxyphenyl-3,5-distearyl-thiotriazylamin, 2-(2'-Hydroxy-3'-hydroxy-3',5'-di-tert.-butylphenyl)-5-chlorbenzotriazol, 2,6-Di-tert.-butyl-4-hydroxymethylphenol, 1,3,5-Trimethyl-2,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxybenzyl-dimethylamin.

Als besonders wirksam erwiesen haben sich und daher vorzugsweise verwendet werden 2,2'-Methylen-bis-(4-methyl-6-tert.-butylphenyl), 1,6-Hexandiol-bis-(3,5-di-tert.-butyl-4-hydroxyphenyl]-propionat (Irganox® 259), Pentaerythrityl-tetrakis-[3-(3,5-di-tert.-butyl-4-hydroxyphenyl)-propionat] sowie N,N'-Hexamethylen-bis-3,5-di-tert.-butyl-4-hydroxyhydrocinnamid (Irganox® 1098) und das vorstehend beschriebene Irganox® 245 der Firma BASF SE, das besonders gut geeignet ist.

Die Antioxidantien G), die einzeln oder als Gemische eingesetzt werden können, sind in einer Menge von 0,05 bis zu 3 Gew.-%, vorzugsweise von 0,1 bis 1,5 Gew.-%, insbesondere 0,1 bis 1 Gew.-%, bezogen auf das Gesamtgewicht der Formmassen A) bis E) enthalten.

In manchen Fällen haben sich sterisch gehinderte Phenole mit nicht mehr als einer sterisch gehinderten Gruppe in ortho-Stellung zur phenolischen Hydroxygruppe als besonders vorteilhaft erwiesen; insbesondere bei der Beurteilung der Farbstabilität bei Lagerung in diffusem Licht über längere Zeiträume.
Als Komponente E) können die erfindungsgemäßen Formmassen 0,05 bis 5, vorzugsweise 0,1 bis 2 und insbesondere 0,25 bis 1,5 Gew.-% eines Nigrosins enthalten.
Unter Nigrosinen versteht man im allgemeinen eine Gruppe von schwarzen oder grauen, mit den Indulinen verwandten Phenazin-Farbstoffen (Azin-Farbstoffen) in verschiedenen Ausführungsformen (wasserlöslich, fettlöslich, spritlöslich), die bei Wollfärberei und -druck, beim Schwarzfärben von Seiden, zum Färben von Leder, Schuhcremes, Firnissen, Kunststoffen, Einbrennlacken, Tinten und dergleichen, sowie als Mikroskopiefarbstoffe Verwendung finden.

Man gewinnt die Nigrosine technisch durch Erhitzen von Nitrobenzol, Anilin und salzsaurem Anilin mit Metall. Eisen und FeCl₃ (Name von lateinischem niger = schwarz).

Die Komponente E) kann als freie Base oder auch als Salz (z.B. Hydrochlorid) eingesetzt werden.

Weitere Einzelheiten zu Nigrosinen sind beispielsweise dem elektronischen Lexikon Römpp Online, Version 2.8, Thieme-Verlag Stuttgart, 2006, Stichwort "Nigrosin" zu entnehmen.

Als Komponente E) können die erfindungsgemäßen thermoplastischen Formmassen übliche Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher, usw. enthalten.

Als Beispiele für Oxidationsverzögerer und Wärmestabilisatoren sind sterisch gehinderte Phenole und/oder Phosphite und Amine (z.B. TAD), Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im Allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß, weiterhin organische Pigmente, wie Phthalocyanine, Chinacridone, Perylene sowie Farbstoffe, wie Anthrachinone als Farbmittel zugesetzt werden.

Als Keimbildungsmittel können Natriumphenylphosphinat, Aluminiumoxid, Siliziumdioxid sowie bevorzugt Talkum eingesetzt werden.

Die erfindungsgemäßen thermoplastischen Formmassen können nach an sich bekannten Verfahren hergestellt werden, indem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 230 bis 320°C.

Nach einer weiteren bevorzugten Arbeitsweise können die Komponenten B) bis E) mit einem Präpolymeren gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente A) bis zur gewünschten Viskosität kondensiert.

Die erfindungsgemäßen thermoplastischen Formmassen zeichnen sich durch eine bessere (intrinsische) Flammwidrigkeit (Wärmefreisetzungskapazität), Fließfähigkeit, bessere Oberfläche (Glanz), geringeren Rückstand bei der Verbrennung, bessere Haftung gegenüber Metalloberflächen und einen effektiven Flammschutz mit geringerem Gehalt des Flammschutzadditivs in der Formmasse.

Ein weiterer Gegenstand der Erfindung ist die Verwendung der Polyamide B) zur Erniedrigung der spezifischen Verbrennungswärme oder der Wärmefreisetzungskapazität oder beider Eigenschaften um mindestens 5%, vorzugsweise 7% gegenüber einer Formmasse gemäß Anspruch 1 ohne Komponente B).

Diese eignen sich daher zur Herstellung von Fasern, Folien und Formkörpern jeglicher Art. Nachfolgend sind einige Beispiele genannt: Steckverbinder, Stecker, Steckerteile, Kabelbaumkomponenten, Schaltungsträger, Schaltungsträgerkomponenten, dreidimensional spritzgegossene Schaltungsträger, elektrische Verbindungselemente und mechatronische Komponenten.

Die erfindungsgemäß aus den thermoplastischen Formmassen herzustellenden Formteile oder Halbzeuge können beispielsweise in der Kraftfahrzeug-, Elektro-, Elektronik-, Telekommunikations-, Informations-technologie-, Unterhaltungs-, Computerindustrie, in Fahrzeugen und anderen Fortbewegungsmitteln, in Schiffen, Raumschiffen, im Haushalt, in Büroausstattungen, Sport, in der Medizin sowie allgemein in Gegenständen und Gebäudeteilen die einen erhöhten Brandschutz erfordern angewandt werden.

Für den Küchen- und Haushaltsbereich ist der Einsatz fließverbesserter Polyamide zur Herstellung von Komponenten für Küchengerate, wie z.B. Friteusen, Bügeleisen, Knöpfe, sowie Anwendungen im Garten- und Freizeitbereich möglich.

### Beispiele

Es wurden folgende Komponenten verwendet:
Komponente A1:
   Polyamid 66 mit einer Viskositätszahl VZ von 120 ml/g, gemessen als 0.5 gew.-%ige Lösung in 96 gew.-%iger Schwefelsäure bei 25°C nach ISO 307 (Es wurde Ultramid® A24 der BASF SE verwendet).
Komponente A2:
   Polyamid 6 mit einer Viskositätszahl VZ von 150 ml/g, gemessen als 0.5 gew.-%ige Lösung in 96 gew.-%iger Schwefelsäure bei 25°C nach ISO 307 (Es wurde Ultramid® B27 der BASF SE verwendet).
Komponenten B:
   Die pyrrolidonhaltigen Polymere B) wurden in Anlehnung an der in DE4333238A1 beschriebenen Vorgehensweise erhalten. Die in den Beispielen aufgeführten Polymere wurden wie folgt hergestellt:
Polymer B1A:
   In einem 1000 ml Rundhalskolben wurden 325g (2,5 mol) Itakonsäure (IKS), 300g entionisiertes Wasser und 347g (2,55 mol) m-Xylylendiamin (MXDA) gegeben. Die Reaktionsmischung wurde bei 108°C unter Rückfluss für 60 min gehalten. Die Temperatur wurde innerhalb einer Stunde schrittweise auf 200°C erhöht, um Wasser abzudestillieren und anschließend der Druck schrittweise auf 3 mbar erniedrigt, um die Polykondensation unter diesen Bedingungen über insgesamt 75 Minuten durchzuführen. (jeweils mit geringem Diaminüberschuss)
   Das Polymer (50 mol% IKS, 50 mol% MXDA) wies eine Tg von 145°C auf
   und Mn/Mw 4300/10400 g/mol sowie VZ 27 ml/g.
Polyamid B2A:
   In einen1000ml Vierhalskolben wurden 260g (2 mol) Itakonsäure, 83g (0,5 mol) Isophthalsäure (IPS), 300g VE-Wasser und 347g (2,55 mol) m-Xylidendiamin zugegeben. Die Reaktionsmischung wurde unter Rückfluß für 60min bei 108°C gerührt. Dann wurde die Temperatur innerhalb von 60 min auf 200°C erhöht und Wasser abdestilliert. Danach wurde ein Druck von 3mbar bei gleichbleibenderTemperatur für 15 Minuten appliziert
   Das Polymer (40 mol% IKS, 10 mol% IPS, 50 mol% MXDA) hatte eine Tg von 141°C, Mn/Mw 3040/7700 g/mol, VZ 13 ml/g.
Polyamid B3A:
   In 1000ml Vierhalskolben wurden 260g (2 mol) Itakonsäure, 73g (0,5 mol) Adipinsäure (AS), 300g VE-Wasser und 347g (2,55 mol) m-Xylidendiamin zugegeben. Die Reaktionsmischung wurde unter Rückfluß für 60min bei 108°C gerührt. Dann wurde die Temperatur innerhalb von 60 min auf 200°C erhöht und Wasser abdestilliert. Danach wurde ein Vakuum von 3mbar bei der Temperatur für 15min appliziert
   Das Polymer (40 mol% IKS, 10 mol% AS, 50 mol% MXDA) hatte eine Tg von 127°C, Mn/Mw 7830/20100 g/mol, VZ 33 ml/g.
Polyamid B3B:
   Die Herstellung erfolgte wie oben für B3A beschrieben.
   Das Polymer (30 mol% IKS, 20 mol% AS, 50 mol% MXDA) hatte eine Tg von 114°C, Mn/Mw 9550/25600 g/mol, VZ 42 ml/g
Polyamid B4A:
   Die Herstellung erfolgte wie oben für B3A beschrieben, jedoch mit Terephthalsäure (TPS) an Stelle von Adipinsäure als zusätzlichem Monomer B1.
   Das Polymer (40 mol% IKS, 10 mol% TPS, 50 mol% MXDA) hatte eine Tg von 126°C, Mn/Mw 5490/20900 g/mol, VZ 32 ml/g
Polyamid B5A:
   Die Herstellung erfolgte wie oben für B3A beschrieben, jedoch mit Hexamethylendiamin (HMD) an Stelle von Adipinsäure als zusätzlichem Monomer B2.
   Das Polymer (50 mol% IKS, 25 mol% HMD, 25 mol% MXDA) hatte eine Tg von 109°C, Mn/Mw 8950/29900 g/mol, VZ 52 ml/g.
Polyamid B6A:
   In einem 250 ml Rundhalskolben wurden 52g (0,4 mol) Itakonsäure(IKS), 50g entionisiertes Wasser und 74g (0,41 mol) 2,5-bis(aminomethyl)-Furan (BAMF) als 70%ige wässrige Lösunggegeben. Die Reaktionsmischung wurde bei 108°C unter Rückfluss für 60 min gehalten. Die Temperatur wurde innerhalb einer Stunde schrittweise auf 200 °C erhöht, um Wasser abzudestillieren und anschließend der Druck schrittweise auf 3 mbar erniedrigt, um die Polykondensation unter diesen Bedingungen über insgesamt 75 Minuten durchzuführen.
   Das Polymer (50 mol% IKS, 50 mol% BAMF) wies eine Tg von 127°C auf
   und Mn/Mw 6200/72000 g/mol sowie VZ 14 ml/g.
Komponente C1:
   40%iges Konzentrat aus rotem Phosphor der mittleren Teilchengröße (d₅₀) von 10 bis 30 µm in Polyamid 6 (erhältlich von Italmatch Chemicals Group).
Komponente C2A:
   Al-diethylphosphinat (Exolit®OP1230 der Clariant GmbH), Partikelgröße (d₉₀) = 80 µm
Komponente C2B:
   Al-diethylphosphinat (Exolit®OP935 der Clariant GmbH): Partikelgröße (d₉₀) = 5.613 µm bestimmt mit einem Mastersizer 2000 (Messbereich von 0.02 - 20000 µm) in Wasser.
Komponente C3:
   Melamincyanurat (Melapur®MC 50 der BASF SE)
Komponente C4
   Al-hypophosphit (erhältlich von Italmatch Chemicals Group)
Komponente C5
   Melaminpolyphosphat (Melapur® M200 der BASF SE)
Komponente D1:
   Schnittglasfasern mit einem mittleren Durchmesser von 10 µm
Komponente D2:
   Biaxiales Carbonfasergelege Sigrafil C30 0/90 mit einem Flächengewicht von 408 g/m², erhältlich von SGL Kümpers GmbH & Co. KG.
Komponente D3:
   Talkum (CAS-No. 14807-96-6) mit einer mittleren Teilchengröße (d50) von 1.7 µm bestimmt mit einem Sedigraph 51XX (Micromeritics Instrument Corporation), erhältlich unter der Produktbezeichnung Microtalc IT extra von MONDO MINERALS B.V. (Niederlande).

### Herstellung der Formmassen

Die Herstellung der Formmassen erfolgte auf drei Extrudern, wie im Folgenden beschrieben. In den jeweiligen Beispielen ist aufgeführt, welche Ausrüstung zum Einsatz kam.

Der DSM Xplore 15 Mikro-Compounder wurde mit einer Temperatur von 260 - 280 °C betrieben. Die Drehzahl der Doppelschnecken betrug 60 rpm. Die Verweildauer der Polymere nach Beschicken des Extruders betrug ca. 3 min. Der Mikro-Compounder zeigt während der Verarbeitung die Wellenkraft an, welche zum Erreichen der vorgeschrieben Drehzahl aufgebracht werden muss.

Zur Herstellung von Formteilen aus auf dem DSM Xplore 15 Mikro-Compounder hergestellten Massen wurde die Polymerschmelze mittels eines beheizten Schmelzegefäßes in die Spritzgußmaschine Xplore Micro-Injection Molding Machine 10cc übertragen und unmittelbar in die Form gespritzt. Es wurde eine Werkzeugtemperatur von 60°C verwandt. Der Spritzguss erfolgte in drei Stufen zu 16 bar für 5 s, 16 bar für 5 s und 16 bar zu 4 s.

Weitere Formmassen wurden mittels eines Zweiwellenextruders ZE25A UTXi (KraussMaffei Berstorff GmbH, Germany) hergestellt. Das Temperaturprofil wurde von 40°C in Zone 1 über 260 °C (Zone 2) auf 280°C (Zonen 3-11) erhöht und konstant gehalten. Eine Drehzahl von 250 U/min wurde eingestellt, was einen Durchsatz von ca.15 kg/h zur Folge hatte. Das Extrudat wurde durch ein Wasserbad gezogen und granuliert.

Weitere Formmassen wurden mittels eines Haake Rheomex CTW 100 OS Doppelschnecken-Extruders (Thermo Fisher Scientific Inc.) verarbeitet. Zonen 1 bis 3 des Extruders wurden bei 280°C gehalten und eine Düsentemperatur von 270 °C verwendet. Der Extruder wurde mit einer Drehzahl von 100 U/min betrieben, wodurch Durchsätze von 1.5 kg/h erzielt wurden. Das zum Erreichen der Drehzahl erforderliche Drehmoment wurde während des Prozesses aufgezeichnet. Das Extrudat wurde durch ein Wasserbad gezogen und granuliert.

Die Herstellung von Formteilen aus granuliertem Extrudat erfolgte auf den Spritzgussmaschinen Arburg Allrounder 470H und Arburg Allrounder 420C (ARBURG GmbH + Co KG), wobei eine Massetemperaturen von 270°C bis 290° C, eine Schneckenumfangsgeschwindigkeit von 100 U/min, Fülldrücke von 500 bar bis 1100 bar, Nachdrücke von 500 bar bis 1000 bar, ein Staudruck von 50 bar und eine Werkzeugtemperatur von 80 °C verwendet wurden.

### Herstellung von carbonfaserverstärkten Formmassen

Granulierte Extrudate wurden nach Lagerung unter flüssigem Stickstoff für 3 min mittels einer Ultrazentrifugalmühle ZM200 (Firma Retsch) mit einem 1,5mm Siebeinsatz zu einem feinen Pulver zerkleinert. Das Pulver wurde 15h bei 60 °C und 30 mbar im Trockenschrank gelagert, um dem Material Feuchte zu entziehen. Das trockene Pulver wurde mittels eines Siebes mit 0,5mm Maschenweite in gleichmäßigen Schichten in der Form, zwischen und auf den Carbonfaserlagen aufgebracht. Die Menge an Polymer wurde so gewählt, dass mit zwei Carbonfaserlagen eine Materialstärke von 1.0 ± 0.1 mm nach Verpressen erzielt wurde. Es wurden 20.5 g bis 21.5 g Granulat mit 2 Carbonfaserlagen mit einem Gewicht von 22 g bis 23 g verwendet. Das aufgeschichtete Material wurde in einen Pressrahmen mit einem Innenmaß von 16 cm x 16 cm und einer Dicke von 0.95 mm gelegt und mit einer Collin Laborpresse P200 P der Firma Dr.Collin GmbH verpresst. Die Pressbedingungen waren wie folgt. 300°C und 10 bar für 2 min, 300°C und 100 bar für 5 min, Abkühlen bei 100 bar auf 25°C während einer Zeitspanne von 15 min. Der Zuschnitt von Probenkörpern für die Materialprüfung erfolgte mittels einer Datron Konturenfräsmaschine (ML Cube oder M35) aus dem inneren Bereich der erhaltenen Platte.

Es wurden folgende Messungen durchgeführt:

### DSC:

Die Glasübergangstemperatur (Tg) des Polymers wurde am Differential Scanning Calorimeter (DSC) Q2000 der Fa. TA Instruments gemessen. Die Abkühl-und Aufheizrate betrug 20 K/min, die Einwaage ca. 8,5 mg, Spülgas war Helium. Die Auswertung der Messkurven (zweite Aufheizkurve) erfolgte in Anlehnung an die ISO-Norm 11357.

### GPC:

### Das Molekulargewicht Mn bzw .Mw der Polyamide wurde wie folgt bestimmt:

15 mg der teilaromatischen Polyamide wurden in 10 ml Hexafluoroisopropanol (HFIP) gelöst. Jeweils 125 µl dieser Lösung wurden mittels Gelpermeationschromatographie (GPC) analysiert. Die Messungen wurden bei Raumtemperatur durchgeführt. Für die Elution wurde HFIP + 0,05 Gew.-% Trifluoroessigsäure-Ka-Salz verwendet. Die Elutionsgeschwindigkeit betrug 0,5 ml/min. Dabei wurde folgende Säulenkombination verwendet (alle Säulen hergestellt von Fa. Showa Denko Ltd., Japan): Shodex® HFIP-800P (Durchmesser 8 mm, Länge 5 cm), Shodex® HFIP-803 (Durchmesser 8 mm, Länge 30 cm), Shodex® HFIP-803 (Durchmesser 8 mm, Länge 30 cm). Die teilaromatischen Polyamide wurden mittels eines RI-Detektors (Differential-Refraktometrie) detektiert. Die Kalibrierung erfolgte mit eng verteilten Polymethylmethacrylat-Standards mit Molekulargewichten von Mₙ = 505 bis Mₙ = 2.740.000 g/mol.

Die Flammwidrigkeit der Formmassen wurde nach der Methode UL94-V (Underwriters Laboratories Inc. Standard of Safety, "Test for Flammability of Plastic Materials for Parts in 30 Devices and Appliances", S. 14 bis S. 18 Northbrook 1998) bestimmt. Sofern nicht anders vermerkt, wurden jeweils fünf Prüfstäbe nach Konditionierung bei Raumtemperatur und 50 ± 10 % relativer Luftfeuchte gemäß der für den UL94V Test vorgeschriebenen Vorgehensweise geprüft. Die Summe der Nachbrennzeiten der 5 Proben nach erster und zweiter Beflammung wurde als Gesamtbrandzeit angegeben.

Die Wärmefreisetzungskapazität (Heat release capacity), spezifische Verbrennungswärme (specific heat of combustion) und Rückstandsmenge nach Pyrolyse unter Stickstoff wurden mit einem FAA Microcombustion Calorimeter (Hersteller: Fire Testing Technology, UK) an Proben mit einem Gewicht von 2.5 mg bis 3.5 mg bestimmt, wobei eine Heizrate von 1 °C/s verwendet wurde und der Pyrolyseofen bis 800 °C geheizt wurde. Der Nachbrenner wurde auf eine Temperatur von 900 °C eingestellt. Die Messung wurde gemäß der in ASTM D7309-13 Vorgehensweise durchgeführt. Die Rückstandsmenge wurde unmittelbar nach der Entnahme des Tiegels aus dem Gerät mit einer Hochpräzisionswaage bestimmt.

Die Glanzwerte wurden mit dem Glanzmessgerät PCE GM-60 der Firma PCE Deutschland GmbH bestimmt. Die angegeben Glanzwerte wurden im relativen Vergleich zu einer geschwärzten Glasplatte mit einem Glanzwert von 90 bei 60° Winkel und von 84 bei 20° Winkel gemessen.

Die Zusammensetzungen der Formmassen und die Ergebnisse der Messungen sind den Tabellen zu entnehmen.

Tabelle 1-1 zeigt, dass erst durch Zumischen des pyrrolidonhaltigen Polyamides B1A zu PA66 bei geringer Konzentrationen an Flammschutzmitteln eine flammhemmende Wirkung erzielt werden kann. Die vom Extruder zur Erhalt der Drehzahl benötigte Kraft ist für die erfindungsgemäßen Formmassen deutlich niedriger, was auf eine höhere Fließfähigkeit der Formmassen und eine niedrigere Belastung der Ausrüstung schließen lässt. Die Herstellung der Formmassen und Prüfkörper erfolgte mit dem DSM Xplore 15 Mikro-Compounder und der Spritzgußmaschine Xplore Micro-Injection Molding Machine.

**Tabelle 1-1: Zusammensetzungen und Materialeigenschaften**

| | 1 | V1 | 2 | V2 |
|---|---|---|---|---|
| A1 | 69,25 | 92,0 | 69,0 | 92,0 |
| B1A | 22,75 | 0 | 23,0 | 0 |
| C1 | 8,0 | 8,0 | 0 | 0 |
| C2A | 0 | 0 | 8,0 | 8,0 |
| | | | | |
| UL94 1.6 mm | V-1 | V-2* | V-0 | V-2 |
| Gesamtbrandzeit | 38 | - | 37 | 42 |
| Wellenkraft (N) | 1388 | 2468 | 1035 | 2080 |

| | | | | |
|---|---|---|---|---|
| *Messung wurde abgebrochen, nachdem zwei Stäbe brennendes Abtropfen aufwiesen. | | | | |

Tabelle 1-2 zeigt, dass erst durch Zumischen des pyrrolidonhaltigen Polyamides B1A zu PA6 bei geringer Konzentration an Flammschutzmitteln eine flammhemmende Wirkung erzielt werden kann. Die vom Extruder zur Erhalt der Drehzahl benötigte Kraft ist für die erfindungsgemäßen Formmassen deutlich niedriger, was auf eine höhere Fließfähigkeit der Formmassen und eine niedrigere Belastung der Ausrüstung schließen lässt. Die Herstellung der Formmassen und Prüfkörper erfolgte mit dem DSM Xplore 15 Mikro-Compounder und der Spritzgußmaschine Xplore Micro-Injection Molding Machine.

**Tabelle 1-2: Zusammensetzungen und Materialeigenschaften**

| | 3 | V3 |
|---|---|---|
| | (% w/w) | (% w/w) |
| A2 | 42,75 | 57,0 |
| B1A | 14,25 | 0 |
| D1 | 25,0 | 25,0 |
| C2A | 0 | 0 |
| C4 | 12,0 | 12,0 |
| C3 | 6,0 | 6,0 |
| | | |
| UL94 1.6 mm Klassifizierung | V-0 | V-2 |
| Gesamtbrandzeit 5 Proben (s) | 20 | 85 |
| Wellenkraft (N) | 1686 | 3720 |

Wie in Tabelle 1-3 gezeigt, können durch Zumischen von pyrrolidonhaltigen Polyamiden im Vergleich zu handelsüblichen amorphen Polyamiden deutlich höhere Oberflächengüten erzielt werden, was einerseits visuell offensichtlich ist und durch deutlich höhere Glanzwerte belegt wird (Tabelle 1-3).

Selar® 3246 der Firma Dupont ist ein amorphes Polyamid, welches durch Reaktion von Isophthalsäure und Terephthalsäure mit Hexamethylendiamin hergestellt wird. Das verwendete Produkt wies eine Zusammensetzung von 19 g/100g Terephthalsäure, 46 g/100g Isophthalsäure und 35 g/100g Hexamethylendiamin auf. Das verwendete Produkt wies eine Viskositätszahl von 79 ml/g auf, bestimmt in einer 0,5 gew.-%igen Lösung in 96 gew.-%iger Schwefelsäure bei 25°C gemäß ISO 307.

Die Herstellung der Formmassen und Prüfkörper erfolgte mit dem Zweiwellenextruders ZE25A UTXi.

**Tabelle 1-3: Zusammensetzungen und Materialeigenschaften**

| | 4 | V4 |
|---|---|---|
| A1 | 39,0 | 39,45 |
| A2 | 4,8 | 4,8 |
| B1A | 7,2 | 0 |
| Selar® 3426 | 0 | 6,75 |
| D1 | 30,0 | 30,0 |
| C2A | 16,0 | 16,0 |
| C5 | 3,0 | 3,0 |
| UL94 0.8 mm | V-0 | V-0 |
| Glanzwert | 43,3 | 21,4 |

Durch Mischung von handelsüblichen Polyamiden mit pyrrolidonhaltigen Polyamiden lassen sich ohne Verwendung von Flammschutzmitteln, wie in Tabelle 1-4 belegt, Formmassen mit niedrigerem Potential zur Wärmefreisetzung und höheren Pyrolyserückständen erzielen. Die Herstellung der Formmassen und Prüfkörper erfolgte mit dem DSM Xplore 15 Mikro-Compounder und der Spritzgußmaschine Xplore Micro-Injection Molding Machine.

**Tabelle 1-4: Zusammensetzungen und Materialeigenschaften**

| | V5 | 5 |
|---|---|---|
| | (% w/w) | (% w/w) |
| A1 | 100 | 80 |
| B1A | 0 | 20 |
| Spezifische Verbrennungswärme (kJ g⁻¹) | 28,1 | 26,7 |
| Veränderung in % gegenüber V5 | - | -5 |
| Wärmefreisetzungskapazität (J g⁻¹ K⁻¹) | 610 | 570 |
| Veränderung in % gegenüber V5 | - | -6 |
| Rückstand nach Pyrolyse | 0,2 | 12,2 |
| Veränderung in % gegenüber V5 | - | +610 |

Auch bei Verwendung weiterer aromatischer Carbonsäuren (Tabelle 2), sowie aliphatischer Carbonsäuren (Tabelle 3) in der Synthese von pyrrolidonhaltigen Polyamiden, kann für deren Mischungen mit handelsüblichen Polyamiden bereits mit geringer Konzentration an Flammschutzmitteln eine deutlich verbesserte Flammwidrigkeit erzielt werden. Die Herstellung der Formmassen und Prüfkörper erfolgte mit dem DSM Xplore 15 Mikro-Compounder und der Spritzgußmaschine Xplore Micro-Injection Molding Machine.

**Tabelle 2: Zusammensetzungen und Materialeigenschaften**

| | 1 | V1 | 2 | V2 |
|---|---|---|---|---|
| | (% w/w) | (% w/w) | (% w/w) | (% w/w) |
| A1 | 50,5 | 67,0 | 50,25 | 67,0 |
| B2A | 16,5 | 0 | 16,75 | 0 |
| D1 | 25,0 | 25,0 | 25,0 | 25,0 |
| C1 | 8,0 | 8,0 | 0 | 0 |
| C2A | 0 | 0 | 8,0 | 8,0 |
| | | | | |
| UL94 1.6 mm | V-0 | V- | V-1 | V- |
| Gesamtbrandzeit 5 Proben (s) | 17 | - | 49 | - |
| Grund für Nichtbestehen | | Brandzeit > 30s | | Brandzeit > 30s |

**Tabelle 3: Zusammensetzungen und Materialeigenschaften**

| | 1 | 2 |
|---|---|---|
| | (% w/w) | (% w/w) |
| A1 | 50,5 | 50,5 |
| B3A | 16,5 | 0 |
| B3B | 0 | 16,5 |
| D1 | 25,0 | 25,0 |
| C1 | 8,0 | 8,0 |
| | | |
| UL94 1.6 mm Klassifizierung | V-1 | V-1 |
| Gesamtbrandzeit 5 Proben (s) | 45 | 93 |

Vergleicht man die Entflammbarkeit der erfindungsgemäßen Mischung von PA66 mit dem pyrrolidonhaltigen Polyamid B3A bei geringere Menge an Flammschutzmittel mit einem handelsüblichen, amorphen und teilaromatischen Polyamid, so wird wie in Tabelle 3-2 gezeigt eine deutliche bessere Einstufung erreicht. Zugleich kann die Verarbeitung mit einer deutlich niedrigeren Belastung des Extruders erfolgen. Das erfindungsgemäß erhaltene Extrudat wies eine deutlich glattere Oberfläche auf. Die Herstellung der Formmassen erfolgte mit dem Haake Polylab Extruder.

**Tabelle 3-2: Zusammensetzungen und Materialeigenschaften**

| | 3 | V3 |
|---|---|---|
| | % w/w | % w/w |
| A/1 | 70,0 | 87,5 |
| B3A | 17,5 | 0 |
| Selar© 3426 | 0 | 17,5 |
| C2B | 12,5 | 12,5 |
| | | |
| Oberflächengüte des Extrudates | glatte Oberfläche | raue Oberfläche |
| UL94 0.8 mm (Lagerung bei RT, 50% r.H.) | V-2 | V- |
| UL94 0.8 mm (Lagerung bei 70°C für 168h) | V-0 | V- |
| Grund für Nichtbestehen | | Nachbrennzeiten >30s Halterungsbrennen |
| Drehmoment Extruder (Nm) | 8 | 11 |

Auch bei Verwendung weiterer aromatischer Carbonsäuren in der Synthese pyrrolidonhaltiger Polyamide kann für deren Mischungen mit handelsüblichen Polyamiden bereits mit geringer Konzentration an Flammschutzmitteln eine deutlich verbesserte Flammwidrigkeit erzielt werden (siehe Tabelle 4-1 und Tabelle 4-2). Insbesondere können Formmassen, die pyrrolidonhaltige Polyamiden enthalten, mit deutlich niedrigerem Drehmoment des Extruders herstellt werden, was zu einer niedrigeren Belastung und besseren Lebenszeit des Extruders führt.
Die Herstellung der Formmassen und Prüfkörper erfolgte mit dem DSM Xplore 15 Mikro-Compounder und der Spritzgußmaschine Xplore Micro-Injection Molding Machine.

**Tabelle 4-1: Zusammensetzungen und Materialeigenschaften**

| | 1 | 2 | V2 |
|---|---|---|---|
| | (% w/w) | (% w/w) | (% w/w) |
| A1 | 50,5 | 50,25 | 67,0 |
| B4A | 16,5 | 16,75 | 0 |
| D1 | 25,0 | 25,0 | 25,0 |
| C1 | 8,0 | 0 | 0 |
| C2A | 0 | 8,0 | 8,0 |
| | | | |
| UL94 1.6 mm Klassifizierung | V-0 | V-1 | V- |
| Gesamtbrandzeit 5 Proben (s) | 30 | 59 | - |
| Grund für Nichtbestehen | | | Brandzeit > 30s |
| | 998 | 990 | 2310 |

**Tabelle 4-2: Zusammensetzungen und Materialeigenschaften. Vergleichsbeispiel in Tabelle 1-2**

| | 3 |
|---|---|
| | (% w/w) |
| A/2 | 42,75 |
| B4A | 14,25 |
| D1 | 25,0 |
| C4 | 12,0 |
| C3 | 6,0 |
| | |
| UL94 1.6 mm Klassifizierung | V0 |
| Gesamtbrandzeit 5 Proben (s) | 20 |
| | |
| Wellenkraft Extruder (N) | 2574 |

Vergleicht man die Entflammbarkeit der erfindungsgemäßen Mischung von PA66 mit dem pyrrolidonhaltigen Polyamid B4A bei geringere Menge an Flammschutzmittel mit einem handelsüblichen, amorphen und teilaromatischen Polyamid, so wird wie in Tabelle 4-3 gezeigt ein deutlich bessere Einstufung erreicht. Zugleich kann die Verarbeitung mit einer deutlich niedrigeren Belastung des Extruders erfolgen. Die Herstellung der Formmassen erfolgte mit dem Haake Polylab Extruder.

**Tabelle 4-3: Zusammensetzungen und Materialeigenschaften**

| | 4 | V4 |
|---|---|---|
| | % w/w | % w/w |
| A1 | 70,0 | 70,0 |
| B4A | 17,5 | 0 |
| Selar® 3426 | 0 | 17,5 |
| C2B | 12,5 | 12,5 |
| UL94 0.8 mm (Lagerung bei RT, 50% r.H.) | V-2 | V- |
| UL94 0.8 mm (Lagerung bei 70°C für 168h) | V-0 | V- |
| Grund für Nichtbestehen | - | Brandzeit >30s Halterungsbrennen |
| Drehmoment Extruder (Nm) | 8 | 11 |

Aus den Granulaten der in Tabelle 4-3 aufgeführten Formmassen wurden zusätzlich Carbonfaser-Verbundplatten mit 1 mm Dicke nach dem oben beschriebenen Verfahren gepresst. Aus diesen Verbundplatten gefräste Prüfkörper wiesen nach erfindungsgemäßer Herstellung ebenfalls eine deutlich bessere Flammwidrigkeit auf (siehe Tabelle 4-4).

**Tabelle 4-4: Zusammensetzung und Brandeigenschaften von Carbonfaser-Verbundplatten.**

| | 5 | V5 | |
|---|---|---|---|
| | % w/w | % w/w | |
| A1 | 34,0 | 34,0 | |
| B3A | 8,5 | 0 | |
| Selar© 3426 | 0 | 8,5 | |
| C2B | 6,1 | 6,1 | |
| Carbonfaser | 51,4 | 51,4 | |
| | | | |
| UL94 1.0 mm | V-1 | V- | |
| Grund für Nichtbestehen | - | Brandzeit >30s | |

Auch bei Verwendung weiterer Diamine in der Synthese pyrrolidonhaltiger Polyamide kann für deren Mischungen mit handelsüblichen Polyamiden bereits mit geringer Konzentration an Flammschutzmitteln eine deutlich verbesserte Flammwidrigkeit erzielt werden (siehe Tabelle 5). Durch Zugabe des pyrrolidonhaltigen Polyamides werden im Vergleich zur ausschließlichen Verwendung der Komponente A erhöhte Rückstände nach Pyrolyse erreicht, sowie deutlich reduzierte Werte der spezifischen Verbrennungswärme und der Wärmefreisetzungskapazität erzielt. Die Verarbeitung der erfindungsgemäßen Formmasse kann mit einer deutlich niedrigeren Belastung des Extruders erfolgen.

Die Herstellung der Formmassen und Prüfkörper erfolgte mit dem DSM Xplore 15 Mikro-Compounder und der Spritzgußmaschine Xplore Micro-Injection Molding Machine.

**Tabelle 5**

| | 1 | V1 |
|---|---|---|
| | (% w/w) | (% w/w) |
| A2 | 42,75 | 57,0 |
| B5A | 14,25 | 0 |
| D1 | 25,0 | 25,0 |
| C4 | 12,0 | 12,0 |
| C3 | 6,0 | 6,0 |
| | | |
| UL94 1.6 mm Klassifizierung | V0 | V-2 |
| Gesamtbrandzeit 5 Proben (s) | 17 | 85 |
| Wellenkraft Extruder (N) | 2936 | 3720 |
| Rückstand nach Pyrolyse (% w/w) (abzüglich Glasfaser) | 14,4 | 13,1 |
| Veränderung in % gegenüber V1 | +10 | - |
| Spezifische Verbrennungswärme (kJ g⁻¹) | 14,5 | 16,0 |
| Veränderung in % gegenüber V1 | -9 | - |
| Wärmefreisetzungskapazität (J g⁻¹ K⁻¹) | 213 | 236 |
| Veränderung in % gegenüber V1 | -6 | - |

Wie in Tabelle 6 gezeigt, wird durch die Zugabe des aus 2,5-Furandicarbonsäure gewonnenen pyrrolidonhaltigen Polyamides zu PA6 bei geringer Menge an Flammschutzmittel eine deutlich bessere Flammwidrigkeit erzielt. Durch Zugabe des pyrrolidonhaltigen Polyamides werden im Vergleich zur ausschließlichen Verwendung der Komponente A deutlich erhöhte Rückstände nach Pyrolyse erreicht, sowie deutlich reduzierte Werte der spezifischen Verbrennungswärme und der Wärmefreisetzungskapazität erzielt. Die Verarbeitung der erfindungsgemäßen Formmasse kann mit einer deutlich niedrigeren Belastung des Extruders erfolgen.

Die Herstellung der Formmassen und Prüfkörper erfolgte mit dem DSM Xplore 15 Mikro-Compounder und der Spritzgußmaschine Xplore Micro-Injection Molding Machine.

**Tabelle 6**

| | 1 | V1 | 2 | V2 |
|---|---|---|---|---|
| | (% w/w) | (% w/w) | (% w/w) | (% w/w) |
| A2 | 50,25 | 67,0 | 42,75 | 57,0 |
| B6A | 16,75 | 0 | 14,25 | 0 |
| D1 | 25,0 | 25,0 | 25,0 | 25,0 |
| C2A | 8,0 | 8,0 | 0 | 0 |
| C4 | 0 | 0 | 12,0 | 12,0 |
| C3 | 0 | 0 | 6,0 | 6,0 |
| | | | | |
| UL94 1.6 mm Klassifizierung | V-1 | V-2 | V-0 | V-2 |
| Gesamtbrandzeit 5 Proben (s) | 73 | 131 | 25 | 85 |
| Wellenkraft Extruder (N) | - | - | 2530 | 3720 |
| Rückstand nach Pyrolyse (% w/w) (abzüglich Glasfaser) | | | 19,4 | 13,1 |
| Veränderung in % gegenüber V2 | | | +48 | - |
| Spezifische Verbrennungswärme (kJ g⁻¹) | | | 13,6 | 16,0 |
| Veränderung in % gegenüber V2 | | | -15 | - |
| Wärmefreisetzungskapazität (J g⁻¹ K⁻¹) | | | 210 | 236 |
| Veränderung in % gegenüber V2 | | | -11 | - |

Wie in Tabelle 7 gezeigt, kann durch die Zugabe pyrrolidonhaltiger Polymere zu PA6 die Belastung des Extruders bei der Verarbeitung von Füllstoffen deutlich reduziert werden.

Die Herstellung der Formmassen und Prüfkörper erfolgte mit dem DSM Xplore 15 Mikro-Compounder.

**Tabelle 7**

| | **1** | **2** | **3** | **4** | **5** | **6** | **V1** |
|---|---|---|---|---|---|---|---|
| A2 | 63 | 56 | 63 | 56 | 63 | 56 | 70 |
| B1A | 7 | 14 | 0 | 0 | 0 | 0 | 0 |
| B3A | 0 | 0 | 7 | 14 | 0 | 0 | 0 |
| B5A | 0 | 0 | 0 | 0 | 7 | 14 | 0 |
| D3 | 30 | 30 | 30 | 30 | 30 | 30 | 30 |
| Wellenkraft Extruder (N) | 1920 | 1440 | 2810 | 2100 | 2680 | 2180 | 3250 |

## Patentansprüche

1. Thermoplastische Formmassen, enthaltend
A)10 bis 98 Gew.-% eines thermoplastischen Polyamides, verschieden von B),
B) 1 bis 50 Gew.-% eines thermoplastischen Polyamides, enthaltend mit den weiteren Wiederholungseinheiten gebundene 2-Pyrrolidon-Einheiten als Wiederholungseinheiten,
C) 0 bis 40 Gew.-% eines halogenfreien Flammschutzmittels,
D) 0 bis 60 Gew.-% eines faser- oder teilchenförmigen Füllstoffes oder deren Mischungen,
E) 0 bis 30 Gew.-% weiterer Zusatzstoffe,
wobei die Summe der Gewichtsprozente A) bis E) 100 % ergibt.

2. Thermoplastische Formmassen nach Anspruch 1, enthaltend
A) 10 bis 98 Gew.-%
B) 1 bis 30 Gew.-%
C) 1 bis 40 Gew.-%
D) 0 bis 50 Gew.-%
E) 0 bis 30 Gew.-%

3. Thermoplastische Formmassen nach den Ansprüchen 1 oder 2, in denen die Komponente B) erhältlich ist durch Polykondensation einer Monomermischung aus, bezogen auf 100 mol-% B1) und B2),
B1) 12,5 bis 50 mol-% Itakonsäure, wobei 0 bis 37,5 mol-% weiterer Dicarbonsäuren (verschieden von Itakonsäure) enthalten sein können,
B2) 12,5 bis 50 mol-% mindestens eines Diamins mit aromatischem Ring, wobei 0 bis 37,5 Mol.-% weiterer Diamine enthalten sein können.

4. Thermoplastische Formmassen nach Anspruch 3, enthaltend als Komponente B2) Diamine mit aromatischem Ring ausgewählt aus der Gruppe m-Xylylendiamin, p-Xylylendiamin, m- oder p- Phenylendiamin, 4,4'Oxydianilin, 4,4'Methylenbisbenzylamin, 1,1-Biphenyl-4,4'diamin, 2,5-bis(aminomethyl)furan oder deren Mischungen.

5. Thermoplastische Formmassen nach den Ansprüchen 1 bis 4, in denen die Komponente C) aus rotem Phosphor, Phosphinsäuresalzen, stickstoffhaltigen Flammschutzmitteln oder deren Mischungen aufgebaut ist.

6. Thermoplastische Formmassen nach den Ansprüchen 1 bis 6, in denen das Molekulargewicht Mn (Zahlenmittel) der Komponente B) gemäß GPC (PMMA Standard und HFIP als Elutionsmittel) von 1000 bis 30000 g/mol beträgt.

7. Thermoplastische Formmassen nach den Ansprüchen 1 bis 6, in denen die Komponente C) aufgebaut ist aus Phosphinsäuresalzen der Formel (I) oder/und Diphosphinsäuresalzen der Formel (II) oder deren Polymeren 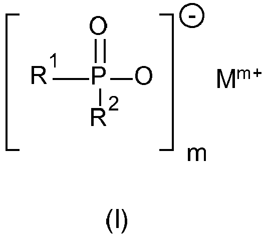 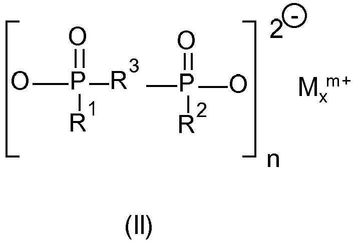 worin
R¹, R² gleich oder verschieden sind und Wasserstoff, C₁-C₆-Alkyl, linear oder verzweigt und/oder Aryl;
R³ C₁-C₁₀-Alkylen, linear oder verzweigt, C₆-C₁₀-Arylen, -Alkylarylen oder-Arylalkylen;
M Mg, Ca, Al, Sb, Sn, Ge, Ti, Zn, Fe, Zr, Ce, Bi, Sr, Mn, Li, Na, K und/oder eine protonierte Stickstoffbase;
m 1 bis 5; n 1 bis 4; x 1 bis 4 bedeuten.

8. Thermoplastische Formmassen nach den Ansprüchen 1 bis 7, in denen die Komponente C) aus mindestens einer Melaminverbindung besteht.

9. Verwendung der thermoplastischen Formmassen gemäß den Ansprüchen 1 bis 8 zur Herstellung von Fasern, Folien und Formkörpern.

10. Verwendung der Polyamide B) zur Erniedrigung der spezifischen Verbrennungswärme und/oder der Wärmefreisetzungskapazität um mindestens 5% gegenüber einer Formmasse gemäß Anspruch 1 ohne Komponente B).

11. Fasern, Folien und Formkörper erhältlich aus den thermoplastischen Formmassen gemäß den Ansprüchen 1 bis 8.

## Claims

1. A thermoplastic molding composition comprising
A) 10 to 98 wt% of a thermoplastic polyamide other than B),
B) 1 to 50 wt% of a thermoplastic polyamide comprising 2-pyrrolidone units as repeating units, said 2-pyrrolidone units being bonded to the further repeating units,
C) 0 to 40 wt% of a halogen-free flame retardant,
D) 0 to 60 wt% of a fibrous or particulate filler or mixtures thereof,
E) 0 to 30 wt% of further added substances,
wherein the weight percentages A) to E) sum to 100%.

2. The thermoplastic molding composition according to claim 1 comprising:
A) 10 to 98 wt%
B) 1 to 30 wt%
C) 1 to 40 wt%
D) 0 to 50 wt%
E) 0 to 30 wt%,

3. The thermoplastic molding composition according to claims 1 or 2 in which component B) is obtainable by polycondensation of a monomer mixture, based on 100 mol% of B1) and B2),
B1) 12.5 to 50 mol% of itaconic acid, wherein 0 to 37.5 mol% of further dicarboxylic acids (distinct from itaconic acid) may be present,
B2) 12.5 to 50 mol% of at least one diamine comprising an aromatic ring, wherein 0 to 37.5 mol% of further diamines may be present.

4. The thermoplastic molding composition according to claim 3 comprising as component B2) diamines having an aromatic ring selected from the group of m-xylylenediamine, p-xylylenediamine, m- or p-phenylenediamine, 4,4'-oxydianiline, 4,4'-methylenebisbenzylamine, 1,1'-biphenyl-4,4'diamine, 2,5-bis(aminomethyl)furan or mixtures thereof.

5. The thermoplastic molding composition according to claims 1 to 4 in which component C) is constructed from red phosphorous, phosphinic acid salts, nitrogen-containing flame retardants or mixtures thereof.

6. The thermoplastic molding composition according to claims 1 to 6 in which the molecular weight Mn (number-average) of component B) according to GPC (PMMA standard and HFIP eluent) is from 1000 to 30 000 g/mol.

7. The thermoplastic molding composition according to claims 1 to 6 in which component C) is constructed from phosphinic acid salts of formula (I) or/and diphosphinic acid salts of formula (II) or polymers thereof 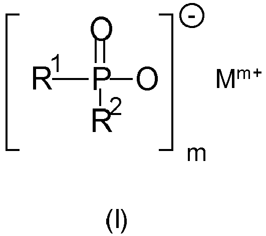 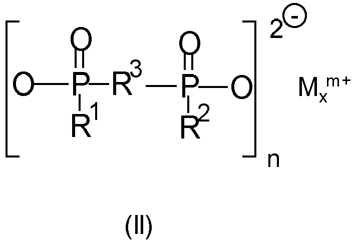 where
R¹, R² are identical or different and represent hydrogen, C₁-C₆-alkyl, linear or branched, and/or aryl;
R³ represents C₁-C₁₀-alkylene, linear or branched, C₆-C₁₀-arylene, -alkylarylene or-arylalkylene;
M represents Mg, Ca, Al, Sb, Sn, Ge, Ti, Zn, Fe, Zr, Ce, Bi, Sr, Mn, Li, Na, K and/or a protonated nitrogen base;
m = 1 to 5; n = 1 to 4; x = 1 to 4.

8. The thermoplastic molding composition according to claims 1 to 7 in which component C) is composed of at least one melamine compound.

9. The use of the thermoplastic molding compositions according to claims 1 to 8 for the production of fibers, films and molded articles.

10. The use of the polyamides B) for reducing the specific heat of combustion and/or the heat release capacity by at least 5% compared to a molding composition according to claim 1 without component B) .

11. A fiber, film and molded article obtainable from the thermoplastic molding compositions according to claims 1 to 8.

## Revendications

1. Matériaux de moulage thermoplastiques, contenant :
A) 10 à 98 % en poids d'un polyamide thermoplastique, différent de B),
B) 1 à 50 % en poids d'un polyamide thermoplastique, contenant des unités 2-pyrrolidone reliées avec les autres unités de répétition en tant qu'unités de répétition,
C) 0 à 40 % en poids d'un agent ignifuge sans halogène,
D) 0 à 60 % en poids d'une charge fibreuse ou particulaire ou de mélanges de celle-ci,
E) 0 à 30 % en poids d'additifs supplémentaires,
la somme des pourcentages en poids de A) à E) étant de 100 %.

2. Matériaux de moulage thermoplastiques selon la revendication 1, contenant :
A) 10 à 98 % en poids,
B) 1 à 30 % en poids,
C) 1 à 40 % en poids,
D) 0 à 50 % en poids,
E) 0 à 30 % en poids.

3. Matériaux de moulage thermoplastiques selon les revendications 1 ou 2, dans lesquels le composant B) peut être obtenu par polycondensation d'un mélange de monomères constitué, par rapport à 100 % en moles de B1) et B2), par :
B1) 12,5 à 50 % en moles d'acide itaconique, 0 à 37,5 % en moles d'acides dicarboxyliques supplémentaires (différents de l'acide itaconique) pouvant être contenus,
B2) 12,5 à 50 % en moles d'au moins une diamine contenant un cycle aromatique, 0 à 37,5 % en moles de diamines supplémentaires pouvant être contenues.

4. Matériaux de moulage thermoplastiques selon la revendication 3, contenant en tant que composant B2) des diamines contenant un cycle aromatique choisies dans le groupe constitué par la m-xylylène-diamine, la p-xylylène-diamine, la m- ou p-phénylène-diamine, la 4,4'-oxydianiline, la 4,4'-méthylène-bisbenzylamine, la 1,1-biphényl-4,4'-diamine, le 2,5-bis(aminométhyl)furane ou leurs mélanges.

5. Matériaux de moulage thermoplastiques selon les revendications 1 à 4, dans lesquels le composant C) est formé par du phosphore rouge, des sels de l'acide phosphinique, des agents ignifuges contenant de l'azote ou leurs mélanges.

6. Matériaux de moulage thermoplastiques selon les revendications 1 à 6, dans lesquels le poids moléculaire Mn (moyenne en nombre) du composant B) par CPG (étalon PMMA et HFIP en tant qu'éluant) est de 1 000 à 30 000 g/mol.

7. Matériaux de moulage thermoplastiques selon les revendications 1 à 6, dans lesquels le composant C) est formé par des sels de l'acide phosphinique de la formule (I) et/ou des sels de l'acide diphosphinique de la formule (II) ou leurs polymères : 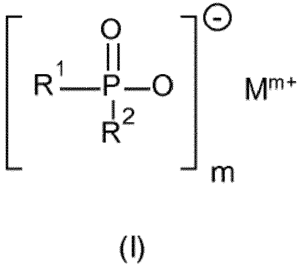 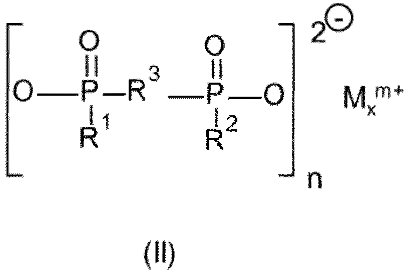 dans lesquelles
R¹, R² sont identiques ou différents, et signifient hydrogène, alkyle en C₁-C₆, linéaire ou ramifié, et/ou aryle ;
R³ signifie alkylène en C₁-C₁₀, linéaire ou ramifié, arylène, alkylarylène ou arylalkylène en C₆-C₁₀,
M signifie Mg, Ca, Al, Sb, Sn, Ge, Ti, Zn, Fe, Zr, Ce, Bi, Sr, Mn, Li, Na, K et/ou une base azotée protonée ;
m signifie 1 à 5 ; n signifie 1 à 4 ; x signifie 1 à 4.

8. Matériaux de moulage thermoplastiques selon les revendications 1 à 7, dans lesquels le composant C) est constitué par au moins un composé de mélamine.

9. Utilisation des matériaux de moulage thermoplastiques selon les revendications 1 à 8 pour la fabrication de fibres, de films et de corps moulés.

10. Utilisation des polyamides B) pour la réduction de la chaleur de combustion spécifique et/ou de la capacité de libération de chaleur d'au moins 5 % en comparaison d'un matériau de moulage selon la revendication 1 sans le composant B).

11. Fibres, films et corps moulés pouvant être obtenus à partir des matériaux de moulage thermoplastiques selon les revendications 1 à 8.
